# EUROPÄISCHE PATENTSCHRIFT

(11) **EP 4 104 963 B1**
(45) Veröffentlichungstag und Bekanntmachung des Hinweises auf die Patenterteilung: **03.04.2024**
(21) Anmeldenummer: 21179299.9
(22) Anmeldetag: 14.06.2021
(51) Int. Cl.: B23K 26/03, B23K 26/06, B23K 26/242, B23K 26/26, B23K 26/32, B23K 31/02, B23K 31/12, H02K 15/00, B23K 101/38, B23K 103/12

(54) **VERFAHREN UND VORRICHTUNG ZUM VERSCHWEISSEN VON LEITERENDEN**
METHOD OF AND DEVICE FOR WELDING CONDUCTOR ENDS
PROCÉDÉ ET DISPOSITIF DE SOUDAGE PERMETTANT DE SOUDER DES EXTRÉMITÉS DE CONDUCTEURS

(43) Veröffentlichungstag der Anmeldung: 21.12.2022
(73) Patentinhaber: Grob-Werke GmbH & Co. KG, 87719 Mindelheim (DE)
(72) Erfinder: Hofmann, Konstantin, 87719 Mindelheim (DE); Schürer, René, 86415 Mering (DE)
(74) Vertreter: KASTEL Patentanwälte PartG mbB

(56) Entgegenhaltungen:
- DE-A1-102013 215 362
- DE-A1-102019 006 282
- DE-A1-102019 132 156
- US-A1- 2004 124 227
- US-A1- 2013 062 324

## Beschreibung

Die Erfindung betrifft ein Schweißverfahren zum Verschweißen von gruppierten Leiterenden eines Bauteils für eine elektrische Maschine mittels einer Schweißvorrichtung. Weiter betrifft die Erfindung eine Schweißvorrichtung zum Verschweißen von gruppierten Leiterenden eines Bauteils für eine elektrische Maschine, wobei die Schweißvorrichtung eine Schweißeinrichtung zum Eintragen von Schweißenergie auf gruppierte Leiterenden umfasst. Insbesondere betrifft die Erfindung ein Verfahren und eine Vorrichtung zum Verschweißen von gruppierten Leiterenden, also Leiterendengruppen, insbesondere Leiterendenpaaren (im Folgenden auch Pinpaar genannt), eines Bauteils für eine elektrische Maschine, insbesondere eines Stators eines als Fahrmotor für ein Elektrofahrzeug ausgebildeten Elektromotors.

Unter elektrischen Maschinen werden insbesondere Maschinen zum Umwandeln elektrischer Energie in Bewegungsenergie und/oder Maschinen zum Umwandeln von Bewegungsenergie in elektrische Energie verstanden. Insbesondere sind darunter Elektromotoren und Generatoren zu verstehen.

Bei der Herstellung von Bauteilen derartiger elektrischer Maschinen, wie beispielsweise Statoren oder Rotoren, ist es oft erforderlich, Enden von aus Drähten gebildeten Leitern gemeinsam zu verarbeiten, wie zum Beispiel gemeinsam zu schneiden oder zu formen, und miteinander zu verbinden.

Bei einem Bauteil einer elektrischen Maschine lassen sich so durch Verschweißen von Leiterendenpaaren Spulenwicklungen ausbilden. Die Kontaktierung erfolgt also über eine stoffschlüssige Verbindung, die mit unterschiedlichen Schweißverfahren realisiert werden kann. Hierfür sind im Stand der Technik neben diversen Strahlschweißverfahren, wie dem Laserstrahl- oder Elektronenstrahlschweißen, auch lichtbogenbasierte Verfahren, wie WIG und Plasmaschweißen, etabliert. Die zu kontaktierenden Leiterenden werden im Parallelstoß stirnseitig an deren freien Enden verschweißt, wobei die Geometrie der Schweißverbindung eine perlen- oder halbkugelförmige Kontur ausbildet. In Abhängigkeit der erforderlichen mechanischen und elektrischen Eigenschaften wird der Anbindungsquerschnitt über das Schmelzvolumen oder die Perlenhöhe individuell eingestellt. Mit "Anbindungsquerschnitt" ist insbesondere eine stoffschlüssige Verbindung zwischen den Fügepartnern in der Parallelebene des Stoßes gemeint.

Beim Schweißprozess an sich erfolgt eine flächige Energieeinbringung, sodass die Stirnfläche der Leiterenden vollständig aufgeschmolzen wird und eine geschlossene Schmelzdecke resultiert. Beim Laserstrahlschweißen wird die Energie entlang einer vorbestimmten oder charakteristischen Schweißkontur eingebracht, deren Geometrie und Dimension in Abhängigkeit des Drahtquerschnittes gewählt wird. Die Dimension dieser Konturen erstreckt sich über den gesamten Querschnitt des Leiterendenpaares oder der zu verschweißenden Leiterenden, sodass eine konstante und gleichmäßige Schmelzdecke entsteht. In Abhängigkeit des erforderlichen Anbindungsquerschnittes ist ein vorbestimmtes oder charakteristisches Schmelzvolumen erforderlich. Dies bedingt insbesondere eine Wiederholung der Schweißkontur, bis der erforderliche Anbindungsquerschnitt erreicht ist.

Stand der Technik zur Analyse der Einschweißtiefe ist die Vermessung der Keyholetiefe. Für dieses bevorzugte Einsatzgebiet wird in der folgenden Literaturstelle
[1] Hollatz, S.; Processing of keyhole depth measurement data during Laser Beam Micro welding; In: Journal of Materials; Design and applications;
   auf die für weitere Einzelheiten ausdrücklich verwiesen wird, eine Analyse der Einschweißtiefe beschrieben.

Jede derartige Spulenwicklung funktioniert nur dann, wenn alle ihre Schweißverbindungen technisch in Ordnung sind. Zum Beispiel ist die Funktionsfähigkeit eines Stators nur dann gegeben, wenn alle Schweißverbindungen all seiner Spulenwicklungen technisch in Ordnung sind. Da Statoren für die oben genannten Einsatzzwecke meist mehr als 200 Leiterendenpaare beinhalten, resultiert ein hoher Anspruch an die Schweißnahtqualität, da bereits eine einzelne Verbindung, die nicht in Ordnung ist, ausreicht, dass der gesamte Stator Ausschuss ist.

Die DE 10 2013 215 362 A1 betrifft ein Verfahren zum Bestimmen einer Einschweißtiefe während eines Laser-Schweißprozesses oder anschließend an einen Laser-Schweißprozess. Die DE 10 2019 132 156 A1 (offenbarend alle Merkmale und Schritte des Oberbegriffs der Ansprüche 1 und 8) offenbart ein Verfahren zum Verschweißen zweier Formstäbe. Die DE 10 2019 006 282 A1 offenbart ein Laserstrahl-Schweißverfahren, bei dem mittels optischer Kohärenztomographie Höheninformationen betreffend ein sich durch das Schweißen bildendes Keyhole erfasst werden. Die US 2004 / 0 124 227 A1 betrifft eine Überwachungsvorrichtung zum Überwachen eines Schweißvorgangs.

Die Erfindung hat sich daher zur Aufgabe gestellt, die Herstellung von elektrischen Verbindungen durch Schweißen an Bauteilen einer elektrischen Maschine, die insbesondere in Großserie zu fertigen ist, universal einsetzbar und/oder besonders zuverlässig zu gestalten.

Zum Lösen dieser Aufgabe schafft die Erfindung ein Verfahren und eine Vorrichtung sowie ein Computerprogrammprodukt gemäß den unabhängigen Ansprüchen.

Vorteilhafte Ausgestaltungen sind Gegenstand der Unteransprüche.

Die Erfindung schafft gemäß einem Aspekt davon ein Schweißverfahren zum Verschweißen von gruppierten Leiterenden eines Bauteils für eine elektrische Maschine entsprechend Anspruch 1.
Es ist bevorzugt, dass Schritt a) den Schritt umfasst:
   a1) Erfassen des ersten Größenparameters mittels optischer Messverfahren.
Es ist bevorzugt, dass Schritt a) den Schritt umfasst:
   a2) Erfassen des ersten Größenparameters mittels Laufzeitmessung reflektierter Strahlung. Mit "Strahlung" ist insbesondere ein Messtrahl oder eine Messstrahlung gemeint. Auch andere auf Laufzeitmessungen basierende Messverfahren können eingesetzt werden. Grundsätzlich ist jedes Messprinzip geeignet, mit dem unterschiedliche Dimensionen der Schweißzone geometrisch ausgemessen werden können.
Es ist bevorzugt, dass Schritt a) den Schritt umfasst:
   a3) Durchführen einer optischen Kohärenztomographie. Bei einer optischen Kohärenztomografie handelt es sich insbesondere um ein bildgebendes Verfahren Bevorzugt werden bei der optischen Kohärenztomografie 2- und 3-dimensionale Aufnahmen gemacht oder erhalten. Die Aufnahmen sind insbesondere in einer sehr geringen Auflösung, bevorzugt Mikrometerauflösung. Bei der optischen Kohärenztomografie wird insbesondere breitbandiges Licht von zeitlich geringer Kohärenzlänge in einem Strahlteiler in zwei Teile geteilt. Ein Teil wird auf eine Probe oder ein Werkstück oder ein Bauteil gelenkt. Der andere Teil durchläuft eine Referenzstrecke. Das von der Probe oder dem Bauteil, beispielsweise den Leiterenden, reflektierte Licht wird mit dem Referenzlicht in einem Interferometer überlagert und so zur Interferenz gebracht. Aus dem Interferenzsignal können dann verschiedene Strukturen entlang einer optischen Achse oder Tiefe unterschieden werden. Durch laterales Scannen über die Probe oder das Bauteil kann man dreidimensionale Bilder oder Aufnahmen erhalten. Mittels optischer Kohärenztomographie kann bevorzugt eine Änderung der Prozesszonendimension während eines Schweißprozesses gemessen werden.
Es ist bevorzugt, dass Schritt a) den Schritt umfasst:
   a4) Anordnen eines Doppelkreuzes relativ zu den gruppierten Leiterenden, insbesondere relativ zu einem Endbereich der gruppierten Leiterenden, und Anordnen von Linien des Doppelkreuzes relativ zueinander, insbesondere in einem vorbestimmten Abstand zueinander. Das Doppelkreuz kann auch als Hashtag bezeichnet werden. Insbesondere ist das Doppelkreuz in einer Ebene zu dem Endbereich relativ zu dem Endbereich angeordnet. Mit anderen Worten kann das Doppelkreuz in einer Ebene mit dem Endbereich oder den Endflächen der Leiterenden liegen. Mit anderen Worten kann das Doppelkreuz auf den Endbereich der gruppierten Leiterenden gelegt oder projiziert werden. Das Doppelkreuz weist bevorzugt vier Linien oder Messlinien oder Maßlinien auf, wobei jeweils zwei in einem vorbestimmten Abstand parallel zueinander angeordnet sind und das jeweilige Linienpaar, von denen die zwei Linien parallel zueinander verlaufen, senkrecht zu dem anderen Linienpaar verläuft oder angeordnet ist, also die beiden Linienpaare in einem Kreuz zueinander angeordnet oder aufgestellt sind.
Es ist bevorzugt, dass Schritt a) den Schritt umfasst:
   a5) Ausbilden eines Doppelkreuzes, welches insbesondere einem Endbereich der gruppierten Leiterenden zugeordnet ist, größer als eine Schweißkontur. Eine "Schweißkontur" bildet sind insbesondere durch das Abfahren des Bauteils, insbesondere des Endbereichs der gruppierten Leiterenden, mit dem Schweißstrahl, bevorzugt entlang einer vorbestimmten Kontur oder Maske.
Es ist bevorzugt, dass Schritt a) den Schritt umfasst:
   a6) Ausbilden eines Doppelkreuzes derart, dass ein Messtrahl, welcher entlang der Linien des Doppelkreuzes führbar ist, vorbestimmte Sprungwege und/oder Sprungzeiten aufweist. Mit anderen Worten kann ein Messtrahl entlang der Linien des Doppelkreuzes geführt werden oder kann die Linien abfahren. Je nach Anordnung, das heißt Abstand der Linien zueinander, kann der Messtrahl beim Abfahren vorbestimmte Sprungwege und/oder Sprungzeiten, insbesondere von einer Linie zur nächsten, aufweisen. Mit "Messtrahl" ist insbesondere eine Strahlung, beispielsweise Licht, gemeint, welche eine vorbestimmte Wellenlänge aufweist.
Es ist bevorzugt, dass Schritt a) den Schritt umfasst:
   a7) Leiten, insbesondere wechselweises Leiten, eines Messstrahls auf unterschiedliche Leiterenden. Mit anderen Worten kann ein Messtrahl auf vorbestimmte Leiterenden oder Endbereiche der Leiterenden geführt oder gerichtet werden. Dabei kann der Messtrahl von einem Leiterende zu nächsten Leiterende und zurück geführt werden.
Es ist bevorzugt, dass Schritt a) den Schritt umfasst:
   a8) Leiten eines Messstrahls auf die gruppierten Leiterenden in wenigstens zwei Dimensionen. Bevorzugt wird der Messstrahl in eine x-Richtung und eine y-Richtung bewegt. Insbesondere kann der Messstrahl in einer Ebene geführt werden. Bevorzugt erstrecken sich die x- und y-Richtung parallel zu einer Ebene eines Endbereichs der Leiterenden oder einer Stirnfläche oder einer Querschnittsfläche der Leiterenden. Insbesondere erstreckt sich die Ebene, welche durch die x- und y-Richtung aufgespannt ist parallel zu den Leiterenden oder zu einer Ebene eines Endbereichs der Leiterenden oder einer Stirnfläche oder einer Querschnittsfläche der Leiterenden.
Es ist bevorzugt, dass Schritt a) den Schritt umfasst:
   a9) Leiten eines Messstrahls auf ein erstes Leiterende der gruppierten Leiterenden, insbesondere einen ersten Endbereich des ersten Leiterendes, und auf ein zweites Leiterende der gruppierten Leiterenden, insbesondere einen zweiten Endbereich des zweiten Leiterendes, in wenigstens zwei Dimensionen.
Es ist bevorzugt, dass Schritt a) den Schritt umfasst:
   a10) Abfahren eines Messstrahls entlang eines Doppelkreuzes, welches den gruppierten Leiterenden zugeordnet ist, wobei das Doppelkreuz jeweils zwei in x- und y-Richtung angeordnete Linien umfasst, welche insbesondere in einem vorbestimmten Abstand zueinander angeordnet sind. Die x- Richtung und die y-Richtung erstrecken sich insbesondere senkrecht zu einer Haupterstreckungsrichtung der Leiter. Die x- Richtung und die y-Richtung erstrecken sich insbesondere parallel zu einer Querschnittsebene der Leiterenden.
Es ist bevorzugt, dass Schritt a) den Schritt umfasst:
   a11) Erfassen einer, insbesondere lateralen, Erstreckung des Schmelzbades als ersten Größenparameter, insbesondere in einer Ebene der gruppierten Leiterenden. Mit anderen Worten kann eine Ausdehnung des Schmelzbades in eine x-Richtung und eine y-Richtung erfasst werden. Mit anderen Worten kann eine Fläche erfasst werden, die das Schmelzbad einnimmt.
Es ist bevorzugt, dass Schritt a) den Schritt umfasst:
   a12) Erfassen zumindest eines Eingangsparameters, wobei als der zumindest eine Eingangsparameter eine Querschnittsfläche eines Endbereichs der gruppierten Leiterenden oder zumindest eines Leiterendes und/oder ein Abstand zwischen den Leiterenden, insbesondere vor dem Schweißen, und/oder ein Höhenversatz zwischen den Leiterenden und/oder ein Radialversatz und/oder ein Tangentialversatz erfasst wird. Der zumindest eine Eingangsparameter wird insbesondere zum Bestimmen des Wertes erfasst. Mit anderen Worten können Eingangsparameter zum Bestimmen des Wertes berücksichtigt werden. Durch die Bestimmung eines oder mehrerer Eingangsparameter kann eine Ausgangssituation oder eine Position der Leiterenden vor dem Schweißen erfasst werden.
Es ist bevorzugt, dass Schritt b) den Schritt umfasst:
   b1) Erfassen des zweiten Größenparameters mittels optischer Messverfahren.
Es ist bevorzugt, dass Schritt b) den Schritt umfasst:
   b2) Erfassen des zweiten Größenparameters mittels Laufzeitmessung reflektierter Strahlung. Auch andere auf Laufzeitmessungen basierende Messverfahren können eingesetzt werden. Grundsätzlich ist jedes Messprinzip geeignet, mit dem unterschiedliche Dimensionen der Schweißzone geometrisch ausgemessen werden können.
Es ist bevorzugt, dass Schritt b) den Schritt umfasst:
   b3) Durchführen einer optischen Kohärenztomographie.
Es ist bevorzugt, dass Schritt b) den Schritt umfasst:
   b4) Erfassen des zweiten Größenparameters an einer Position eines Schweißstrahls. Mit anderen Worten kann der zweite Größenparameter an einer aktuellen Stelle, an der der Schweißstrahl auf die gruppierten Leiterenden trifft, erfasst werden. Besonders bevorzugt kann an einer Position eines Brennflecks des Schweißstrahls, besonders bevorzugt eines Laserspots des Laserstrahls als Schweißstrahl, der zweite Größenparameter erfasst werden.
Es ist bevorzugt, dass Schritt b) den Schritt umfasst:
   b5) Führen oder Leiten eines Messstrahls zu einer, insbesondere aktuellen, Position eines Schweißstrahls. Besonders bevorzugt kann der Messtrahl dem Schweißstrahl folgen.
Es ist bevorzugt, dass Schritt b) den Schritt umfasst:
   b6) Erfassen einer Tiefe eines Lochs oder einer Dampfkapillare oder eines Dampfkanals, insbesondere eines Keyholes, an einer Position eines Schweißstrahls. Mit "Keyhole" ist insbesondere ein Dampfkanal aufgrund der Phasentransformation im Brennfleck des Schweißstrahls, insbesondere Laserstrahls, gemeint.
Es ist bevorzugt, dass Schritt b) den Schritt umfasst:
   b7) Erfassen einer Tiefe eines Lochs oder einer Dampfkapillare oder eines Dampfkanals, insbesondere eines Keyholes, an einer Position eines Schweißstrahls in eine Haupterstreckungsrichtung der gruppierten Leiterenden.
Es ist bevorzugt, dass Schritt b) den Schritt umfasst:
   b8) Erfassen einer Tiefe eines Lochs oder einer Dampfkapillare oder eines Dampfkanals, insbesondere eines Keyholes, in eine Strahlrichtung eines Schweißstrahls.
Es ist bevorzugt, dass Schritt b) den Schritt umfasst:
   b9) Erfassen einer Spalttiefe bei einer Spaltüberfahrt eines Messtrahls und/oder Schweißstrahls. Mit "Spalt" ist insbesondere ein Spalt zwischen den Leiterenden gemeint. Dabei sind die Leiterenden insbesondere in einem vorbestimmten Abstand zueinander angeordnet, wodurch sich der Spalt bildet. Mit "Spaltüberfahrt" ist insbesondere eine Bewegung des Messtrahls und/oder Schweißstrahls von einem Leiterende zum nächsten Leiterende, insbesondere über den Spalt gemeint.
Es ist bevorzugt, dass Schritt b) den Schritt umfasst:
   b10) Erfassen einer Schmelzbadtiefe. Mit "Schmelzbadtiefe" ist insbesondere eine Erstreckung des Schmelzbades in eine Haupterstreckungsrichtung, also bevorzugt in eine z-Richtung, der Leiter gemeint.
Es ist bevorzugt, dass Schritt b) den Schritt umfasst:
   b11) Erfassen einer Schmelzbadtiefe auf einer Oberfläche zumindest eines Leiterendes oder der gruppierten Leiterenden, insbesondere an einem Endbereich der gruppierten Leiterenden. Mit anderen Worten kann insbesondere erfasst oder bestimmt werden, wie weit sich das Schmelzbad ausgehend von der Oberfläche zumindest eines Leiterendes oder der gruppierten Leiterenden in die Haupterstreckungsrichtung erstreckt. Mit anderen Worten kann eine Höhe des Schmelzbades auf einer Oberfläche zumindest eines Leiterendes oder der gruppierten Leiterenden erfasst werden.
Es ist bevorzugt, dass Schritt b) den Schritt umfasst:
   b12) Erfassen einer Einschweißtiefe an einer Position eines Schweißstrahls.
Es ist bevorzugt, dass Schritt b) den Schritt umfasst:
   b13) Korrelieren einer erfassten Tiefe, insbesondere Keyholetiefe, an einer Position eines Schweißstrahls mit einer Höheninformation in eine Haupterstreckungsrichtung der gruppierten Leiterenden. Mit anderen Worten kann die erfasste Tiefe als zweiter Größenparameter mit einer Höhe des Schmelzbades in Beziehung gesetzt werden.
Es ist bevorzugt, dass Schritt b) den Schritt umfasst:
   b14) Erfassen zumindest eines Eingangsparameters, wobei als der zumindest eine Eingangsparameter eine Querschnittsfläche eines Endbereichs der gruppierten Leiterenden oder zumindest eines Leiterendes und/oder ein Abstand zwischen den Leiterenden, insbesondere vor dem Schweißen, und/oder ein Höhenversatz zwischen den Leiterenden und/oder ein Radialversatz und/oder ein Tangentialversatz erfasst wird. Der zumindest eine Eingangsparameter wird insbesondere zum Bestimmen des Wertes erfasst. Mit anderen Worten können Eingangsparameter zum Bestimmen des Wertes berücksichtigt werden. Durch die Bestimmung eines oder mehrere Eingangsparameter kann eine Ausgangssituation oder eine Position der Leiterenden vor dem Schweißen erfasst werden.
Es ist bevorzugt, dass Schritt c) den Schritt umfasst:
   c1) Bestimmen einer Schmelzbaddimension des Schmelzbades als Wert des Schmelzbades. Insbesondere kann die Schmelzbaddimension durch eine Erstreckung des Schmelzbades in die x- und y-Richtung und/oder die Keyholetiefe bestimmt oder ermittelt werden.
Es ist bevorzugt, dass Schritt c) den Schritt umfasst:
   c2) Bestimmen einer Zunahme eines Schmelzvolumens als Wert des Schmelzbades.
Es ist bevorzugt, dass Schritt c) den Schritt umfasst:
   c3) Bestimmen eines Anbindungsquerschnitts der gruppierten Leiterenden als Wert des Schmelzbades. Besonders bevorzugt kann der Anbindungsquerschnitt durch die Bestimmung der Schmelzbaddimension bestimmt werden.
Es ist bevorzugt, dass Schritt d) den Schritt umfasst:
   d1) Leiten eines Schweißstrahls auf die gruppierten Leiterenden.
Es ist bevorzugt, dass Schritt d) den Schritt umfasst:
   d2) Leiten eines Schweißstrahls, insbesondere wiederholtes Leiten, entlang einer symmetrischen oder asymmetrischen Kontur. Mit "Kontur" ist insbesondere eine Schweißkontur gemeint.
Es ist bevorzugt, dass Schritt d) den Schritt umfasst:
   d3) Leiten eines Schweißstrahls, insbesondere wiederholtes Leiten, entlang einer elliptischen Kontur.
Es ist bevorzugt, dass Schritt d) den Schritt umfasst:
   d4) Bilden eines Schmelzringes mittels eines Schweißstrahls.
Es ist bevorzugt, dass Schritt d) den Schritt umfasst:
   d5) Bilden einer Schmelzdecke oder eines Schmelzbades mittels eines Schweißstrahls.
Es ist bevorzugt, dass Schritt d) den Schritt umfasst:
   d6) Bilden einer Schweißperle.
Es ist bevorzugt, dass Schritt d) den Schritt umfasst:
   d7) Starten des Schweißenergieeintrags auf die gruppierten Leiterenden. Mit anderen Worten kann damit begonnen werden einen Schweißstrahl, welcher eine vorbestimmte Energie aufweist, auf die gruppierten Leiterenden zu richten oder zu lenken.
Es ist bevorzugt, dass Schritt d) den Schritt umfasst:
   d8) Stoppen des Schweißenergieeintrags auf die gruppierten Leiterenden.
Es ist bevorzugt, dass Schritt d) den Schritt umfasst:
   d9) Stoppen des Schweißenergieeintrags auf die gruppierten Leiterenden, wenn der bestimmte Wert einen Grenzwert erreicht. Mit Grenzwert ist insbesondere ein vorbestimmter Wert gemeint, den der bestimmte Wert nicht überschreiten darf.
Es ist bevorzugt, dass Schritt d) den Schritt umfasst:
   d10) Anpassen, insbesondere Vergrößern oder Verringern, des Schweißenergieeintrags auf die gruppierten Leiterenden. Mit anderen Worten kann eine Energie des Schweißstrahls derart angepasst werden, dass die Energie erhöht oder verringert wird.
Es ist bevorzugt, dass Schritt d) den Schritt umfasst:
   d11) Einbringen eines vorbestimmten, insbesondere höheren, Schweißenergieeintrags bei einem Höhenversatz zwischen den Leiterenden auf das in eine Haupterstreckungsrichtung der gruppierten Leiterenden weiter oder höher erstreckende Leiterende. Mit Höhenversatz ist insbesondere gemeint, dass zumindest ein Leiterende relativ zu einem anderen Leiterende in eine Haupterstreckungsrichtung der Leiter länger ist oder weiter heraussteht.
Es ist bevorzugt, dass Schritt d) den Schritt umfasst:
   d12) Verteilen eines Schweißenergieeintrags entsprechend eines tangentialen Versatzes oder Tangentialversatzes zwischen den Leiterenden. Mit "Tangentialversatz" ist insbesondere gemeint, dass die Leiterenden nicht deckungsgleich, sondern versetzt oder verschoben, insbesondere weiterhin parallel, besonders bevorzugt in eine Richtung, zueinander angeordnet sind.
Es ist bevorzugt, dass Schritt d) den Schritt umfasst:
   d13) Leiten von zwei Schweißstrahlen, insbesondere sequenzielles Leiten eines Schweißstrahls oder simultanes Leiten von zwei Schweißstrahlen, auf die gruppierten Leiterenden, wobei ein Schweißstrahl einem Leiterende der gruppierten Leiterenden und der zweite Schweißstrahl einem weiteren Leiterende der gruppierten Leiterenden zugeordnet ist. Mit sequenziellem Leiten ist insbesondere gemeint, dass zunächst ein Schweißstrahl auf ein Leiterende und nach einer vorbestimmten Zeitspanne der, insbesondere gleiche, Schweißstrahl auf ein weiteres Leiterende gelenkt wird. Mit anderen Worten wird auf das eine Leiterende und das weitere Leiterende nacheinander ein Schweißstrahl gelenkt. Mit "simultanem Leiten" ist insbesondere gemeint, dass auf dem einen Leiterende ein erster Schweißstrahl und auf das weitere Leiterende ein zweiter, von dem ersten Schweißstrahl verschiedene Schweißstrahl, gelenkt wird. Auf das eine Leiterende und auf das weitere Leiterende werden insbesondere gleichzeitig jeweils ein Schweißstrahl gelenkt.
Es ist bevorzugt, dass Schritt d) den Schritt umfasst:
   d14) Erfassen eines Zeitpunktes an dem sich zwei Einzelschmelzbäder zu einem Schmelzbad vereinen, wobei das erste Schmelzbad einem ersten Leiterende und das zweite Schmelzbad dem zweiten Leiterende zugeordnet ist. Mit anderen Worten kann auf jedem der beiden Leiterenden ein Schmelzbad gebildet werden. Durch eine Zunahme oder Vergrößerung oder Ausdehnung des jeweiligen Schmelzbades können sich die beiden Schmelzbäder zu einem Schmelzbad vereinen. Bevorzugt kann ein Zeitpunkt bestimmt werden, an dem sich die beiden Schmelzbäder zu einem Schmelzbad vereinen.
Es ist bevorzugt, dass Schritt d) den Schritt umfasst:
   d15) Verschweißen der Leiterenden, insbesondere an einem Endbereich und/oder stirnseitig, in einem Parallelstoß. Mit Parallelstoß ist insbesondere gemeint, dass die Leiter oder Leiterenden überlappt und breitflächig aufeinander liegen.

Das Schweißverfahren umfasst, dass vor Schritt a) eine Relativposition eines ersten Leiterendes und eines zweiten Leiterendes der gruppierten Leiterenden erfasst wird, wobei das Erfassen der Relativposition durch Positionsmessen mittels optischer Messverfahren erfolgt. Beispielsweise kann durch eine Messeinrichtung eine Relativposition eines ersten Leiterendes und eines zweiten Leiterendes der jeweiligen Leiterendengruppe erfasst werden. Die Messeinrichtung kann hierzu unterschiedlich ausgebildet sein, solange sie die Relativpositionen zwischen den Leiterenden erfassen und ein die Relativposition anzeigendes Messignal an eine Steuereinrichtung 30 übermitteln kann. Dies erfolgt vorzugsweise durch optische Messmethoden, wie zum Beispiel Bilderfassung oder optische Längenmessungen, hierzu gibt es verschiedene Messgeräte auf dem Markt. Insbesondere ist die Messeinrichtung dazu ausgebildet, mehrere Dimensionen des Endbereichs der Leiterendengruppe auszumessen.

Vorzugsweise umfasst das Schweißverfahren, dass vor Schritt a) eine Relativposition eines ersten Leiterendes und eines zweiten Leiterendes der gruppierten Leiterenden erfasst wird, wobei das Erfassen der Relativposition durch Positionsmessen mittels Laufzeitmessung reflektierter Strahlung erfolgt. Auch andere auf Laufzeitmessungen basierende Messverfahren können eingesetzt werden. Grundsätzlich ist jedes Messprinzip geeignet, mit dem die Relativposition ausgemessen werden kann.

Vorzugsweise umfasst das Schweißverfahren, dass vor Schritt a) eine Relativposition eines ersten Leiterendes und eines zweiten Leiterendes der gruppierten Leiterenden erfasst wird, wobei das Erfassen der Relativposition durch Durchführen einer optischen Kohärenztomographie erfolgt.

Vorzugsweise umfasst das Schweißverfahren, dass vor Schritt a) eine Relativposition eines ersten Leiterendes und eines zweiten Leiterendes der gruppierten Leiterenden erfasst wird, wobei das Erfassen der Relativposition durch wechselweises Leiten eines Messstrahls auf unterschiedliche Leiterendengruppen erfolgt, welche zumindest ein gruppiertes Leiterende aufweisen.

Vorzugsweise umfasst das Schweißverfahren, dass vor Schritt a) eine Relativposition eines ersten Leiterendes und eines zweiten Leiterendes der gruppierten Leiterenden erfasst wird, wobei das Erfassen der Relativposition durch ein Vermessen von Abständen oder Strecken in wenigstens zwei Dimensionen an einer Leiterendengruppe erfolgt oder durchgeführt wird.

Vorzugsweise umfasst das Schweißverfahren, dass vor Schritt a) eine Relativposition eines ersten Leiterendes und eines zweiten Leiterendes der gruppierten Leiterenden erfasst wird, wobei das Erfassen der Relativposition durch ein Vermessen eines Abstandes oder einer Strecke in Richtung der Erstreckung der die Leiterenden aufweisenden Leiterabschnitte erfolgt.

Vorzugsweise umfasst das Schweißverfahren, dass vor Schritt a) eine Relativposition eines ersten Leiterendes und eines zweiten Leiterendes der gruppierten Leiterenden erfasst wird, wobei das Erfassen der Relativposition durch ein Ermitteln eines Abstands zwischen den Leiterenden erfolgt. Mit anderen Worten kann ein Spalt oder ein vorbestimmter Abstand zwischen den Leiterenden erfasst werden.

Vorzugsweise umfasst das Schweißverfahren, dass vor Schritt a) eine Relativposition eines ersten Leiterendes und eines zweiten Leiterendes der gruppierten Leiterenden erfasst wird, wobei das Erfassen der Relativposition durch ein Messen eines Höhenversatzes zwischen den Leiterenden erfolgt.

Vorzugsweise umfasst das Schweißverfahren, dass vor Schritt a) eine Relativposition eines ersten Leiterendes und eines zweiten Leiterendes der gruppierten Leiterenden erfasst wird, wobei das Erfassen der Relativposition durch ein Ermitteln einer Querschnittsfläche eines Endbereichs der gruppierten Leiterenden oder zumindest eines Leiterendes der Leiterenden erfolgt.

Vorzugsweise umfasst das Schweißverfahren, dass vor Schritt a) eine Relativposition eines ersten Leiterendes und eines zweiten Leiterendes der gruppierten Leiterenden erfasst wird, wobei das Erfassen der Relativposition durch ein Ermitteln eines tangentialen Versatzes oder eines Tangentialversatzes zwischen den Leiterenden erfolgt.

Vorzugsweise umfasst das Schweißverfahren, dass vor Schritt a) eine Relativposition eines ersten Leiterendes und eines zweiten Leiterendes der gruppierten Leiterenden erfasst wird, wobei das Erfassen der Relativposition durch ein Ermitteln eines radialen Versatzes oder Radialversatzes zwischen den Leiterenden erfolgt.

Vorzugsweise umfasst das Schweißverfahren, dass vor Schritt a) eine Relativposition eines ersten Leiterendes und eines zweiten Leiterendes der gruppierten Leiterenden erfasst wird, wobei das Erfassen der Relativposition durch ein Messen einer Dicke und/oder einer Breite und/oder einer Höhe eines Endbereichs an der Leiterendengruppe oder den gruppierten Leiterenden erfolgt.

Vorzugsweise umfasst das Schweißverfahren, dass vor Schritt a) eine Relativposition eines ersten Leiterendes und eines zweiten Leiterendes der gruppierten Leiterenden erfasst wird, wobei das Erfassen der Relativposition durch ein Erfassen zumindest eines Eingangsparameters erfolgt, wobei als der zumindest eine Eingangsparameter eine Querschnittsfläche eines Endbereichs der gruppierten Leiterenden oder zumindest eines Leiterendes und/oder ein Abstand zwischen den Leiterenden, insbesondere vor dem Schweißen, und/oder ein Höhenversatz zwischen den Leiterenden und/oder ein Radialversatz und/oder ein Tangentialversatz erfasst wird. Der zumindest eine Eingangsparameter wird insbesondere zum Bestimmen des Wertes erfasst. Mit anderen Worten können Eingangsparameter zum Bestimmen des Wertes berücksichtigt werden. Durch die Bestimmung eines oder mehrere Eingangsparameter kann eine Ausgangssituation oder eine Position der Leiterenden vor dem Schweißen erfasst werden.

Vorzugsweise wird bei dem Schweißverfahren der erste Größenparameter, der zweite Größenparameter, eine Erstreckung des Schmelzbades, eine Tiefe eines Dampfkanals oder einer Dampfkapillare an der Position des Schweißstrahls, zumindest ein Spaltmaß und/oder der Wert zu korrespondierenden Größen und/oder Datensätze aus Vorversuchen korreliert. Mit anderen Worten kann der erste Größenparameter, der zweite Größenparameter, eine Erstreckung des Schmelzbades, eine Tiefe eines Dampfkanals oder einer Dampfkapillare an der Position des Schweißstrahls, zumindest ein Spaltmaß und/oder der Wert mit korrespondierenden Größen und/oder Datensätze aus Vorversuchen verglichen oder in Beziehung gesetzt werden.

Vorzugsweise wird bei dem Schweißverfahren ein Trainingsdatensatz für neuronale Netze gebildet, wobei der Trainingsdatensatz den ersten Größenparameter, den zweiten Größenparameter, eine Erstreckung des Schmelzbades, eine Tiefe eines Dampfkanals oder einer Dampfkapillare an der Position des Schweißstrahls, zumindest ein Spaltmaß, den Wert und/oder Datensätzen aus Vorversuchen umfasst.

Das Schweißverfahren gemäß einer der voranstehenden Ausgestaltungen wird vorzugsweise mittels einer Schweißvorrichtung gemäß einer der nachstehenden Ausgestaltungen durchgeführt. Vorzugsweise ist die Schweißvorrichtung gemäß einer der nachstehenden Ausgestaltungen zum Durchführen des Schweißverfahrens gemäß einer der voranstehenden Ausgestaltungen ausgebildet.

Gemäß einem weiteren Aspekt schafft die Erfindung eine Schweißvorrichtung zum Verschweißen von gruppierten Leiterenden eines Bauteils für eine elektrische Maschine entsprechend Anspruch

Es ist bevorzugt, dass die Messeinrichtung zum Bewerten des Schweißergebnisses ausgebildet ist.

Es ist bevorzugt, dass die Schweißvorrichtung eine Vergleichseinrichtung zum Vergleichen des Wertes mit einem vorbestimmten Grenzwert umfasst. Beispielsweise kann die Vergleichseinrichtung in die Steuereinrichtung oder die Messeinrichtung integriert sein. Bevorzugt ist die Vergleichseinrichtung dazu eingerichtet, den bestimmten Wert mit einem vorbestimmten, insbesondere hinterlegten, Grenzwert zu vergleichen.

Es ist bevorzugt, dass die Messeinrichtung zum Erfassen des ersten Größenparameters mittels optischer Messverfahren ausgebildet ist.

Es ist bevorzugt, dass die Messeinrichtung zum Erfassen des ersten Größenparameters mittels Laufzeitmessung reflektierter Strahlung ausgebildet ist.

Es ist bevorzugt, dass die Messeinrichtung zum Durchführen einer optischen Kohärenztomographie ausgebildet ist.

Es ist bevorzugt, dass die Messeinrichtung zum Anordnen eines Doppelkreuzes relativ zu den gruppierten Leiterenden, insbesondere einem Endbereich der gruppierten Leiterenden, und Anordnen von Linien des Doppelkreuzes relativ zu einander, insbesondere in einem vorbestimmten Abstand, ausgebildet oder eingerichtet ist.

Es ist bevorzugt, dass die Messeinrichtung zum Ausbilden eines Doppelkreuzes, welches insbesondere einem Endbereich der gruppierten Leiterenden zugeordnet ist, größer als eine Schweißkontur, ausgebildet ist.

Es ist bevorzugt, dass die Messeinrichtung zum Ausbilden eines Doppelkreuzes derart ausgebildet ist, dass ein Messtrahl, welcher entlang der Linien des Doppelkreuzes führbar ist, vorbestimmte Sprungzeiten und/oder Sprungwege aufweist.

Es ist bevorzugt, dass die Messeinrichtung zum Leiten, insbesondere wechselweisen Leiten, eines Messstrahls auf unterschiedliche Leiterenden ausgebildet ist.

Es ist bevorzugt, dass die Messeinrichtung zum Leiten eines Messstrahls auf die gruppierten Leiterenden in wenigstens zwei Dimensionen ausgebildet ist.

Es ist bevorzugt, dass die Messeinrichtung zum Leiten eines Messstrahls auf ein erstes Leiterende der gruppierten Leiterenden, insbesondere einen ersten Endbereich des ersten Leiterendes, und auf ein zweites Leiterende der gruppierten Leiterenden, insbesondere einen zweiten Endbereich des zweiten Leiterendes, in wenigstens zwei Dimensionen ausgebildet ist.

Es ist bevorzugt, dass die Messeinrichtung zum Abfahren eines Messstrahls entlang eines Doppelkreuzes, welches den gruppierten Leiterenden zugeordnet ist, wobei das Doppelkreuz jeweils zwei in x- und y-Richtung angeordnete Linien umfasst, welche insbesondere in einem vorbestimmten Abstand zueinander angeordnet sind, ausgebildet ist.

Es ist bevorzugt, dass die Messeinrichtung zum Erfassen einer, insbesondere lateralen, Erstreckung des Schmelzbades als ersten Größenparameter, insbesondere in einer Ebene der gruppierten Leiterenden, ausgebildet ist.

Es ist bevorzugt, dass die Messeinrichtung zum Erfassen zumindest eines Eingangsparameters, wobei als der zumindest eine Eingangsparameter eine Querschnittsfläche eines Endbereichs der Leiterendengruppe oder zumindest eines Leiterendes und/oder ein Abstand zwischen den Leiterenden, insbesondere vor dem Schweißen, und/oder ein Höhenversatz zwischen den Leiterenden und/oder ein Tangentialversatz und/oder ein Radialversatz erfasst wird, ausgebildet ist.

Es ist bevorzugt, dass die Messeinrichtung zum Erfassen des zweiten Größenparameters mittels optischer Messverfahren ausgebildet ist.

Es ist bevorzugt, dass die Messeinrichtung zum Erfassen des zweiten Größenparameters mittels Laufzeitmessung reflektierter Strahlung ausgebildet ist.

Es ist bevorzugt, dass die Messeinrichtung zum Durchführen einer optischen Kohärenztomographie ausgebildet ist.

Es ist bevorzugt, dass die Messeinrichtung zum Führen eines Messstrahls zu einer Position eines Schweißstrahls ausgebildet ist.

Es ist bevorzugt, dass die Messeinrichtung zum Erfassen des zweiten Größenparameters an einer Position eines Schweißstrahls ausgebildet ist.

Es ist bevorzugt, dass die Messeinrichtung zum Erfassen einer Tiefe eines Lochs oder einer Dampfkapillare oder eines Dampfkanals, insbesondere eines Keyholes, an einer Position eines Schweißstrahls ausgebildet ist.

Es ist bevorzugt, dass die Messeinrichtung zum Erfassen einer Tiefe eines Lochs oder einer Dampfkapillare oder eines Dampfkanals, insbesondere eines Keyholes, an einer Position eines Schweißstrahls in eine Haupterstreckungsrichtung der gruppierten Leiterenden ausgebildet ist.

Es ist bevorzugt, dass die Messeinrichtung zum Erfassen einer Spalttiefe bei einer Spaltüberfahrt eines Messtrahls und/oder einer Schweißstrahls ausgebildet ist.

Es ist bevorzugt, dass die Messeinrichtung zum Erfassen einer Schmelzbadtiefe ausgebildet ist.

Es ist bevorzugt, dass die Messeinrichtung zum Erfassen einer Schmelzbadtiefe auf einer Oberfläche zumindest eines Leiterendes oder der gruppierten Leiterenden ausgebildet ist.

Es ist bevorzugt, dass die Messeinrichtung zum Erfassen zumindest eines Eingangsparameters, wobei als der zumindest eine Eingangsparameter eine Querschnittsfläche eines Endbereichs der Leiterendengruppe oder zumindest eines Leiterendes und/oder ein Abstand zwischen den Leiterenden, insbesondere vor dem Schweißen, und/oder ein Höhenversatz zwischen den Leiterenden und/oder ein Tangentialversatz und/oder ein Radialversatz erfasst wird, ausgebildet ist.

Es ist bevorzugt, dass die Messeinrichtung zum Bestimmen einer Schmelzbaddimension des Schmelzbades als Wert des Schmelzbades ausgebildet ist.

Es ist bevorzugt, dass die Messeinrichtung zum Bestimmen einer Zunahme eines Schmelzvolumens als Wert des Schmelzbades ausgebildet ist.

Es ist bevorzugt, dass die Messeinrichtung zum Bestimmen eines Anbindungsquerschnitts der gruppierten Leiterenden als Wert des Schmelzbades ausgebildet ist.

Es ist bevorzugt, dass die Messeinrichtung zum Positionsmessen mittels Laufzeitmessung reflektierter Strahlung ausgebildet ist.

Es ist bevorzugt, dass die Messeinrichtung zum Durchführen einer optischen Kohärenztomographie ausgebildet ist.

Es ist bevorzugt, dass die Messeinrichtung zum wechselweisen Leiten einer Messstrahlung auf unterschiedliche Leiterendengruppen, welche zumindest ein gruppiertes Leiterende aufweist, ausgebildet ist.

Es ist bevorzugt, dass die Messeinrichtung zum Vermessen von Abständen oder Strecken in wenigstens zwei Dimensionen an einer Leiterendengruppe ausgebildet ist.

Es ist bevorzugt, dass die Messeinrichtung zum Vermessen eines Abstandes oder einer Strecke in Richtung der Erstreckung der die Leiterenden aufweisenden Leiterabschnitte ausgebildet ist.

Es ist bevorzugt, dass die Messeinrichtung zum Ermitteln eines Abstands zwischen den Leiterenden ausgebildet ist.

Es ist bevorzugt, dass die Messeinrichtung zum Messen eines Höhenversatzes zwischen den Leiterenden ausgebildet ist.

Es ist bevorzugt, dass die Messeinrichtung zum Ermitteln einer Querschnittsfläche des Endbereichs der gruppierten Leiterenden oder zumindest eines Leiterendes der Leiterenden ausgebildet ist.

Es ist bevorzugt, dass die Messeinrichtung zum Ermitteln eines tangentialen Versatzes zwischen den Leiterenden ausgebildet ist.

Es ist bevorzugt, dass die Messeinrichtung zum Ermitteln eines radialen Versatzes zwischen den Leiterenden ausgebildet ist.

Es ist bevorzugt, dass die Messeinrichtung zum Messen einer Dicke, einer Breite und/oder einer Höhe des Endbereichs an der Leiterendengruppe ausgebildet ist.

Selbstverständlich kann die Messeinrichtung zum Ausüben einzelner und/oder mehrerer der vorgenannten Messfunktionen ausgebildet sein.

Vorzugsweise ist die Steuereinrichtung dazu ausgebildet, die Schweißeinrichtung zum Leiten eines Schweißstrahls auf die gruppierten Leiterenden anzusteuern.

Vorzugsweise ist die Steuereinrichtung dazu ausgebildet, die Schweißeinrichtung zum Leiten eines Schweißstrahls entlang einer symmetrischen Kontur anzusteuern. Bei Ausführungsformen kann der Schweißstrahl auch entlang einer asymmetrischen Kontur angesteuert werden.

Vorzugsweise ist die Steuereinrichtung dazu ausgebildet, die Schweißeinrichtung zum Leiten eines Schweißstrahls entlang einer elliptischen Kontur anzusteuern.

Vorzugsweise ist die Steuereinrichtung dazu ausgebildet, die Schweißeinrichtung zum Bilden eines Schmelzringes mittels eines Schweißstrahls anzusteuern.

Vorzugsweise ist die Steuereinrichtung dazu ausgebildet, die Schweißeinrichtung zum Bilden einer Schmelzdecke mittels eines Schweißstrahls anzusteuern.

Vorzugsweise ist die Steuereinrichtung dazu ausgebildet, die Schweißeinrichtung zum Bilden einer Schweißperle anzusteuern.

Vorzugsweise ist die Steuereinrichtung dazu ausgebildet, die Schweißeinrichtung zum Starten des Schweißenergieeintrags auf die gruppierten Leiterenden anzusteuern.

Vorzugsweise ist die Steuereinrichtung dazu ausgebildet, die Schweißeinrichtung zum Stoppen des Schweißenergieeintrags auf die gruppierten Leiterenden anzusteuern.

Vorzugsweise ist die Steuereinrichtung dazu ausgebildet, die Schweißeinrichtung zum Stoppen des Schweißenergieeintrags auf die gruppierten Leiterenden, wenn der bestimmte Wert einen Grenzwert erreicht, anzusteuern. Insbesondere ist die Steuereinrichtung dazu eingerichtet, ein Signal von der Vergleichseinrichtung zu empfangen, sobald der Wert einen Grenzwert erreicht.

Vorzugsweise ist die Steuereinrichtung dazu ausgebildet, die Schweißeinrichtung zum Anpassen, insbesondere Vergrößern oder Verringern, des Schweißenergieeintrags auf die gruppierten Leiterenden anzusteuern.

Vorzugsweise ist die Steuereinrichtung dazu ausgebildet, die Schweißeinrichtung zum Einbringen eines vorbestimmten, insbesondere höheren, Schweißenergieeintrags bei einem Höhenversatz zwischen den Leiterenden auf das in eine Haupterstreckungsrichtung der gruppierten Leiterenden weiter oder höher erstreckende Leiterende anzusteuern.

Vorzugsweise ist die Steuereinrichtung dazu ausgebildet, die Schweißeinrichtung zum Verteilen eines Schweißenergieeintrags entsprechend eines tangentialen Versatzes zwischen den Leiterenden anzusteuern.

Vorzugsweise ist die Steuereinrichtung dazu ausgebildet oder eingerichtet, die Schweißeinrichtung zum Leiten von zwei Schweißstrahlen auf die gruppierten Leiterenden, insbesondere sequenzielles Leiten eines Schweißstrahls oder simultanes Leiten von zwei Schweißstrahlen, wobei ein Schweißstrahl einem Leiterende der gruppierten Leiterenden und der zweite Schweißstrahl einem weiteren Leiterende der gruppierten Leiterenden zugeordnet ist, anzusteuern.

Vorzugsweise ist die Steuereinrichtung dazu ausgebildet, die Schweißeinrichtung zum Erfassen eines Zeitpunktes an dem sich zwei Einzelschmelzbäder zu einem Schmelzbad vereinen, wobei das erste Schmelzbad einem ersten Leiterende und das zweite Schmelzbad dem zweiten Leiterende zugeordnet ist, anzusteuern.

Vorzugsweise ist die Steuereinrichtung dazu ausgebildet, die Schweißeinrichtung zum Verschweißen der Leiterenden, insbesondere an einem Endbereich und/oder stirnseitig, in einem Parallelstoß anzusteuern.

Selbstverständlich kann die Steuereinrichtung zum Ausüben einzelner und/oder mehrerer der vorgenannten Steuerfunktionen ausgebildet sein.

Zu der Erfindung gehören auch Weiterbildungen der erfindungsgemäßen Schweißvorrichtung, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Schweißvorrichtung hier nicht noch einmal beschrieben.

Gemäß einem weiteren Aspekt schafft die Erfindung ein Computerprogrammprodukt entsprechend Anspruch 15.

Im Folgenden werden Effekte, Funktionen und Vorteile bevorzugter Ausgestaltungen der Erfindung näher erläutert.

Die Kontaktierung von elektrisch zu verschaltenden Kupferdrähten (auch Kupferpins genannt) erfolgt über stoffschlüssige Verbindungen, die mit unterschiedlichen Schweißverfahren realisiert werden können. Hierfür sind im Stand der Technik neben diversen Strahlschweißverfahren, wie dem Laserstrahl- oder Elektronenstrahlschweißen, auch lichtbogenbasierte Verfahren, wie WIG und Plasmaschweißen etabliert.

Vorzugsweise werden die zu kontaktierenden Pins im Parallelstoß stirnseitig an deren freien Enden verschweißt, wobei die Geometrie der Schweißverbindung eine perlen- beziehungsweise halbkugelförmige Kontur ausbildet.

Vorzugsweise wird in Abhängigkeit der erforderlichen mechanischen und elektrischen Eigenschaften der Anbindungsquerschnitt, welcher bevorzugt als eine stoffschlüssige Verbindung zwischen den Fügepartnern in der Parallelebene des Stoßes ausgebildet ist, über das Schmelzvolumen und/oder die Perlenhöhe individuell eingestellt. Beim Schweißprozess erfolgt bevorzugt eine flächige Energieeinbringung, sodass die Stirnfläche vollständig aufgeschmolzen wird und eine geschlossene Schmelzdecke resultiert. Vorzugsweise wird die Energie, besonders bevorzugt beim Laserstrahlschweißen, entlang einer charakteristischen Schweißkontur eingebracht, deren Geometrie und Dimension in Abhängigkeit des Drahtquerschnittes gewählt wird. Die Dimension dieser Konturen erstreckt sich vorzugsweise über den gesamten Querschnitt des Pinpaares, sodass eine konstante und gleichmäßige Schmelzdecke entsteht. In Abhängigkeit des erforderlichen Anbindungsquerschnittes ist insbesondere ein charakteristisches Schmelzvolumen erforderlich oder vorgesehen. Vorzugweise ist hierzu eine Wiederholung der Schweißkontur vorgesehen, bis der erforderliche Anbindungsquerschnitt erreicht ist.

Stand der Technik zur InLine Analyse der Einschweißtiefe ist die Vermessung der Keyholetiefe, wie es in [1] beschrieben und gezeigt ist. Jedoch kann damit nur die Einschweißtiefe und nicht das Schmelzvolumen und somit der Anbindungsquerschnitt beim Schweißen von Kupferdrähten quantifiziert werden. Zudem existiert im Stand der Technik kein systemtechnisches Messmittel zur InLine-Analyse der Prozesszonendimension und somit zur situationsabhängigen Steuerung des Energieeintrages. Vorzugsweise werden die prozesstechnischen Stellgrößen derart gewählt, dass der erforderliche Anbindungsquerschnitt auch dann erreicht wird, wenn ungünstige Randbedingungen hinsichtlich der Pinpositionen vorliegen. Im Vergleich dazu kann bei idealen Randbedingungen ein überdimensionaler Energieeintrag resultieren. Grundsätzlich kann sich dies jedoch negativ auf die Minimierung der entlackten Länge und der Schweißzeit auswirken. Im schlimmsten Fall können bei einer Kombination ungünstiger Randbedingungen hinsichtlich der Positionsversätze der Pins, Toleranzen nicht beliebig ausgeglichen werden, oder die Prozessparameter nicht derart konfiguriert werden, sodass die erforderlichen Anbindungsquerschnitte erreicht werden. Bei derartigen Randbedingungen kann eine Schweißverbindung, dessen Anbindungsquerschnitt nicht den Anforderungen entspricht und somit ein "niO" ("nicht in Ordnung") darstellt, resultieren. Ein Stator hat zum Beispiel zwischen 150 und 300 Schweißverbindungen, wobei bereits eine einzige niO-Schweißverbindung zu einem Ausschuss des gesamten Stators führt. Dies erfordert bevorzugt eine situationsabhängige Anpassung und Steuerung des Energieeintrages, sodass in Abhängigkeit des Prozesszonenwachstums und/oder Schmelzbadwachstums die erforderlichen Anbindungsquerschnitte erreicht werden können. Vorzugsweise kann dies mit einer Messeinrichtung, insbesondere einem Inline Messtool, erreicht werden, dass die Schmelzbadgeometrie während der Schweißvorgangs quantifizieren kann.

Zudem erfolgt vorzugsweise eine vorgelagerte Positionsvermessung der Pins, da individuelle Positionen in x-, y- und z-Richtung vorliegen können. Des Weiteren erfolgt ebenfalls bevorzugt für jeden Schweißvorgang eine InLine Vermessung des Prozesszonenwachstums, um den Energieeintrag situativ implementieren zu können. Zusätzlich wird vorzugsweise über die Schmelzbaddimension in Kombination mit der Keyholetiefe der Anbindungsquerschnitt im Stoß ermittelt. Mit "Keyhole" ist insbesondere ein Dampfkanal aufgrund der Phasentransformation im Brennfleck des Lasers gemeint.

Aktuell im Stand der Technik etablierte Prozessüberwachungssysteme beschränken sich auf die Detektion von Prozessemissionen und bewerten zudem ausschließlich die Konstanz dieser Bewertungsgrößen. Hierbei wird neben thermischen Größen auch das Prozessleuchten detektiert und hinsichtlich deren Konstanz und Streuweite ausgewertet. Aktuell erfolgt bevorzugt die Ermittlung des Anbindungsquerschnitts auf Basis von Prozessemissionen. Im konkreten Fall wird hierbei insbesondere über die Wärmestrahlung das Abkühlverhalten quantifiziert und darüber auf das Schmelzevolumen respektive den Anbindungsquerschnitt im Spalt geschlossen.

Es wird eine Messstrategie zur Bestimmung des Anbindungsquerschnittes vorgeschlagen, die insbesondere auf OCT-Technologien basiert, die von einem breiten Kreis von Anwendern eingesetzt werden kann.

Ausgestaltungen der Erfindung sehen ein Messsystem vor, bei dem mit dem OCT Messstrahl InLine, also während des Schweißvorgangs, die Schmelzbaddimension in x- und y-Richtung, also in der Ebene der Drahtquerschnitte, gemessen wird. Des Weiteren wird vorzugsweise ebenfalls mittels OCT die Schmelzbaddimension in z-Richtung, also insbesondere in Drahtrichtung, gemessen. Die Messung erfolgt bevorzugt im Keyhole, das durch Verdampfung von Schmelze einen Dampfkanal in Strahlrichtung im Schmelzbad resultiert, ist nahezu ausschließlich mit gasförmigem Metall gefüllt, und nur diese Tiefe kann mit dem Lichtstrahl des OCT gemessen werden. Mit "Keyhole" ist bevorzugt ein Dampfkanal am Ort des Laserspots, das heißt am Ort der Energieeinbringung gemeint, an dem das Metall verdampft. Diese Tiefe des mit gasförmigem Metall gemessene Wegstrecke dient bevorzugt als Höheninformation in z-Richtung, aus der wie nachfolgend beschrieben wird, zusätzlich mit der Erstreckung des Schmelzbades in x- und y-Richtung, dem Drahtquerschnitt sowie der Abstand der Drähte vor dem Verschweißen sowie deren Höhenversatz, der Anbindungsquerschnitt errechnet werden kann.

Alternativ oder zusätzlich können bevorzugt durch Datensätze aus Vorversuchen an unterschiedlichen Drahtquerschnitten mit unterschiedlichen Spaltmaßen und unterschiedlichen Schmelzbaddimension in x-, y- und z-Richtung die Anbindungsquerschnitte und zu den genannten Parametern korreliert werden. Hier kann bevorzugt ein Trainingsdatensatz für neuronale Netze erstellt werden, der nach dem Training die Anbindungsquerschnitte in Abhängigkeit von den Eingangsparametern ermittelt werden kann.

Die Erfindung bietet im Vergleich zu den im Stand der Forschung und Technik etablierten Lösungen einen deutlichen Verfahrensvorteil, da eine direkte Quantifizierung der Bewertungsgrößen im Detail der Schmelzbaddimension auf Basis der Ist-Situation erfolgt.

Durch das vorgeschlagene Verfahren ist es insbesondere möglich auf individuelle Gegebenheiten, insbesondere verschiedene Versätze von Drahtenden zu reagieren und einen gleichbleibenden Anbindungsquerschnitt zu erreichen. Damit soll es beispielsweise möglich sein, auf das Schneiden der Drahtenden auf gleichmäßiges Höhenniveau verzichten zu können. Bevorzugte Ausgestaltungen der Erfindung ermöglichen eine Quantifizierung, um den Energieeintrag situationsabhängig zu steuern, sodass ein Schmelzevolumen resultiert, das den geforderten Anbindungsquerschnitt erzeugt. Damit können zudem ein überdimensionierter Energieeintrag sowie thermische Beschädigungen des Isolationslackes und gleichzeitig zu geringe Anbindungsquerschnitte aufgrund ungünstiger Randbedingungen vermieden werden.

Die entwickelte Messstrategie ermöglicht bevorzugt eine InLine Quantifizierung der Prozesszonengeometrie und somit die Steuerung des Energieeintrages, um den erforderlichen Anbindungsquerschnitt zu erreichen.

Bevorzugte Ausgestaltung des Systems: Das Messsystem basiert auf optischer Kohärenztomographie kurz OCT. Hierbei wird ein Messstrahl mit einer Wellenlänge von circa 840 nm emittiert. Über eine Berechnung der Laufzeit des reflektierten Signals wird die Höheninformation des Bauteils in z-Richtung ermittelt.

Die Messstrategie kann als Doppelkreuz ausgeführt werden. Vor dem Schweißvorgang werden mit dem OCT die Positionen der ungeschnittenen Hairpins in x-y-z-Richtung zueinander ermittelt. Des Weiteren werden während des Schweißprozesses die Prozesszonendimensionen in x-, y- und z-Richtung gemessen. Es wird einerseits mittels Hashtag-Messstrategie die Schmelzbaddimension in x- und y-Richtung ermittelt, und alternierend dazu die Keyholetiefe, das heißt die Schmelzbaddimension in z-Richtung. Die laterale Erstreckung des Schmelzbades in x- und y-Richtung wird über zwei jeweils in x- und y-Richtung angeordnete Linien mit einem definierten Abstand zueinander ermittelt. Der OCT Messstrahl wird bei der Messung ausschließlich entlang der Linien geführt. Durch Volumenausdehnung im Bereich des Schmelzbades verkürzt sich die gemessene Wegstrecke und/oder Laufzeit des Messstrahls, sodass dadurch der Rückschluss auf Schmelze innerhalb der Kontur möglich ist. Das heißt, nach einem vollständigen Konturdurchlauf, kann ermittelt werden, ob die Innenfläche der Kontur vollständig mit Schmelze gefüllt ist. Wichtig hierbei ist insbesondere die Kontur über die Lage der Linien relativ zu den Drahtenden und relativ zueinander geeignet anzuordnen. Hierbei ist bevorzugt ein geringer Randabstand vorgesehen, wobei das Hashtag oder Doppelkreuz bevorzugt größer im Vergleich zur Dimension der Schweißkontur ist. Durch Versuche kann ermittelt werden, welche minimalen Abstände der Linien benötigt werden, um die Schmelzbaddimension in x- und y-Richtung zu ermitteln, mittels denen der geforderte Anbindungsquerschnitt erreicht wird. Das Hashtag wird bevorzugt umlaufend derart gestaltet, sodass minimale Sprungwege und/oder Sprungzeiten resultieren. Nach einem vollständigen Durchlauf des Hashtags kann zur Vermessung des Keyholes gewechselt werden, indem der Messstrahl zur aktuellen Position des Laserspots springt und dort die Tiefe des Keyholes vermisst. Die Ermittlung der Schmelzbaddimension ist erforderlich, da es Fälle gibt, in denen nicht der gesamte Drahtquerschnitt aufgeschmolzen wird, beispielsweise bei einem breiten Spalt, in dem die Schmelze in den Spalt fließt. Im Fall zu großer Linienabstände kann es bei hohem Spaltmaß dazu kommen, dass die Schmelze die Hashtag-Linien nicht erreicht und somit zu viel Energie eingebracht werden würde, obwohl bereits vor dem Erreichen ein ausreichender Anbindungsquerschnitt vorliegt. Nach dem Messen sind die ortsbezogene Tiefe des Schmelzbades und die Schmelzbaddimension in x- und y-Richtung bekannt. Daraus wird mittels geometrischer Betrachtung das Schmelzevolumen berechnet. Im Falle von symmetrischen Positionsunterschieden der zu verschweißenden Drähte, entsteht ein asymmetrisches Schmelzbad entlang der Kontaktfläche, da die Energieeinbringung symmetrisch erfolgt, zum Beispiel über elliptische Konturen und die Wärmeleitung im Falle gleicher Bestrahlungsanteile zur gleichmäßigen Energieverteilung in die beiden Pins führt. Abhängig vom Messfortschritt und dem Fortschritt des Aufschmelzens wird die Zunahme des Schmelzevolumens bestimmt und damit der Anbindungsquerschnitt. Bei Erreichen eines Grenzwertes wird die Emission der Laserenergie gestoppt.

Bauteilspezifische Anpassung des Energieeintrages in Abhängigkeit der Querschnittfläche des Pinpaares, das heißt der Bestrahlungsort und die Flächenenergie, können in Abhängigkeit des Drahtquerschnittes und des Messsignals (OCT) gesteuert werden.

Des Weiteren werden bei einer bevorzugten Ausgestaltung folgende Randbedingungen berücksichtigt:
A) Höhenversatz
B) tangentialer Versatz und/oder Seitenversatz
C) radialer Versatz und/oder Spalt.

Vorzugsweise erfolgt eine Implementierung der Flächenenergie entsprechend der vorliegenden geometrischen Randbedingungen A bis C, sodass eine homogene Schweißperle entsteht.

Speziell im Falle eines Höhenversatzes, insbesondere im Fall A), wird vorzugsweise der Hauptanteil der Energie auf den höherstehenden Pin eingebracht, sodass ein identisches Höhenniveau beider verschweißten Drähte vorliegt. Bei Spaltüberfahrt wird hierbei bevorzugt die Keyholetiefe gemessen und als Messgröße für die Berechnung der Anbindungsfläche herangezogen.

Insbesondere im Fall B erfolgt bevorzugt eine Verteilung der Flächenenergie entsprechend des vorliegenden tangentialen Versatzes. Insbesondere bei Verwendung von elliptischen Schweißkonturen, ist die Längsachse entsprechend zu rotieren, sodass diese die Mittelpunkte der Einzelpins schneidet. Demnach ist die Kontur des Doppelkreuzes winklig anzustellen. Analog zu A) wird bevorzugt die Stoßebene der Fügepartner zur Bewertung der Prozesszonentiefe herangezogen.

Insbesondere im Fall C) erfolgt bevorzugt ein Implizieren von zwei pinbezogenen Schweißkonturen zur Vermeidung eines Energieeintrages in den Spalt. Die Messkontur in Form eines Doppelkreuzes kann beibehalten werden. Hierbei ist insbesondere der Zeitpunkt zu tracken, an dem sich beide Einzelschmelzbäder zu einem gemeinsamen Schmelzbad vereinen. In Bezug auf die Messung der Schmelzbadtiefe, kann die Keyholetiefe nicht als Bewertungsgröße herangezogen werden, da das Keyhole nach unten geöffnet ist, sodass eine geringe oder keine Signalantwort zurückkommt. Die Information der Schmelzbadtiefe im Spalt ist bevorzugt hierbei von der Schmelzbadtief auf der Pinoberfläche zu ziehen.

Ausführungsbeispiele der Erfindung werden im Folgenden anhand der beigefügten Zeichnungen näher erläutert. Darin zeigt:
Fig. 1 Schweißanordnung umfassend eine Schweißvorrichtung mit einer Schweißeinrichtung, einer Messeinrichtung und einer Steuereinrichtung zum Verschweißen von gruppierten Leiterenden eines Bauteils für eine elektrische Maschine;
Fig. 2a bis 2e eine schematische Darstellung einer Draufsicht auf ein zu verschweißendes Leiterendenpaar mit Prozesszonenbedingungen zu verschiedenen Zeiten eines Schweißverfahrens oder Prozessfortschrittes inklusive Messlinien;
Fig. 3 eine schematische Darstellung einer Schnittansicht eines zu verschweißenden Leiterendenpaars im Bereich eines Keyholes mit einem darauf gerichteten Messtrahl;
Fig. 4a und 4b eine schematische Darstellung einer Schnittansicht des zu verschweißenden Leiterendenpaars mit einer Schweißnaht;
Fig. 5 eine perspektivische Ansicht eines weiteren Leiterendenpaares mit unterschiedlichen Relativpositionen der Leiterenden vor dem Schweißen;
Fig. 6a bis 6d je eine isometrische Ansicht des zu verschweißenden Leiterendenpaars zu verschiedenen Zeiten eines Schweißverfahrens oder Prozessfortschrittes entsprechend den Zuständen von Fig. 2a bis 2d in perspektivischer Ansicht;
Fig. 7a bis 7d je eine isometrische Ansicht des zu verschweißenden Leiterendenpaars zu verschiedenen Zeiten eines Schweißverfahrens oder Prozessfortschrittes entsprechend den Zuständen von Fig. 2a bis 2d in Seitenansicht;
Fig. 8a bis 8d je eine isometrische Ansicht des zu verschweißenden Leiterendenpaars zu verschiedenen Zeiten eines Schweißverfahrens oder Prozessfortschrittes entsprechend den Zuständen von Fig. 2a bis 2d in Draufsicht;
Fig. 9a und 9b je eine Seitenansicht Ansicht des zu verschweißenden Leiterendenpaars bei einem Höhenversatz der Leiterenden;
Fig. 10 eine schematische Darstellung des zu verschweißenden Leiterendenpaars bei einem Spalt zwischen den Leiterenden in einer Draufsicht; und
Fig. 11 eine schematische Darstellung des zu verschweißenden Leiterendenpaars bei einem tangentialen Versatz zwischen den Leiterenden in einer Draufsicht.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind gleiche und funktionsgleiche Elemente mit dem gleichen Bezugszeichen versehen.

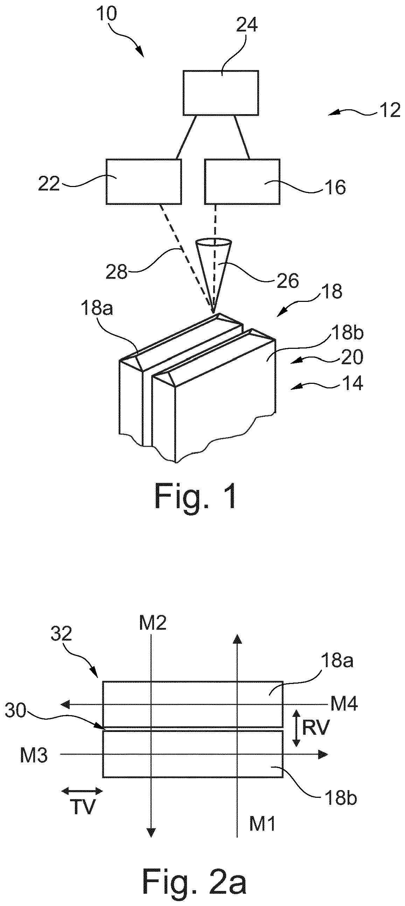

Fig. 1 zeigt eine schematische Darstellung einer Schweißanordnung 10 mit einer Schweißvorrichtung 12 und ein zu bearbeitendes Bauteil 14. Von dem Bauteil 14 stehen Leiterenden 18, 18a, 18b vor. In Fig. 1 ist ein Leiterendenpaar 20 gezeigt. Das Bauteil 14 umfasst bevorzugt mehrere Leiter, insbesondere elektrische Leiter, und mehrere Leiterendenpaare 20. Die Leiterenden 18, 18a, 18b sind paarweise nebeneinander angeordnet.

Das Bauteil 14 ist ein in Großserie herzustellendes Bauteil einer elektrischen Maschine, wie zum Beispiel eines als Fahrmotor für Elektro- oder Hybridfahrzeuge einzusetzenden Elektromotors. Durch Verbinden von Leiterenden 18, insbesondere Leiterendenpaaren 20, werden Spulenwicklungen des Bauteils 14 hergestellt.

Beispielsweise ist das Bauteil 14 ein Stator des Elektromotors. Die Leiterenden 18 sind zum Beispiel die als Pins bezeichneten Enden von Hairpins, also von U-förmig geformten Drahtstücken, insbesondere aus Rechteckdraht, die in Nuten eines Gehäuses oder Blechpakets des Stators eingefügt sind. Durch Verbinden der freien Enden der Hairpins, also der Leiterendenpaare 20, lassen sich die wellenartig durch den Stator verlaufenden Spulenwicklungen ausbilden.

Vor dem Verschweißen der Spulenwicklungen stehen sehr viele Leiterenden 18 aus einem Ende des Gehäuses oder einer Stirnseite oder -fläche vor, die meist zu Leiterendenpaaren 20 gruppiert sind. In Fig. 1 ist solch ein Leiterendenpaar 20 schematisch dargestellt. Mittels einer Schweißeinrichtung 16 der Schweißvorrichtung 12 sind ein erster Leiter 18a und ein zweiter Leiter 18b eines Leiterendenpaares 20 miteinander zu verschweißen, um so insbesondere einen Hairpin mit einem anderen Hairpin zu verbinden. Es kann aber auch vorkommen, dass drei oder mehr Leiterenden 18 miteinander zu verbinden sind, was dann ebenfalls durch das im Folgenden näher ausgeführte Schweißen oder Schweißverfahren durchzuführen ist.

Vor dem Schweißen werden die Leiter, insbesondere die Leiterenden 18a, 18b jedes zu verschweißenden Leiterendenpaares 20 miteinander verspannt. Hierzu kann die Schweißvorrichtung 12 beispielsweise eine Spanneinrichtung (in Figuren nicht gezeigt) aufweisen. Das Schweißen wird im Folgenden anhand eines Beispiels mit dem Leiterendenpaar 20 erläutert.

Die Schweißvorrichtung 12 umfasst zum Verschweißen zumindest eines Leiterendenpaares 20 die Schweißeinrichtung 16, eine Messeinrichtung 22 und eine Steuereinrichtung 24. Die Steuereinrichtung 24 ist signaltechnisch, insbesondere leitungsgebunden oder leitungsungebunden, mit der Messeinrichtung 22 und/oder der Schweißeinrichtung 16 gekoppelt oder verbunden. Die Steuereinrichtung 24 ist dazu eingerichtet, die Schweißeinrichtung 16 und/oder die Messeinrichtung 22 anzusteuern. Zudem kann die Messeinrichtung 22 dazu eingerichtet sein, erfasste Parameter oder Werte oder Messgrößen an die Steuereinrichtung 24 zu übermitteln oder zu senden. Beispielsweise kann die Steuereinrichtung 24 als Steuerung oder Controller ausgebildet sein. Die Steuereinrichtung 24 weist zum Beispiel eine Steuerung auf, die eine Recheneinheit und einen Speicher umfasst, in dem Steueranweisungen als Software gespeichert sind.

Die Schweißeinrichtung 16 ist dazu eingerichtet, einen Schweißstrahl 26 auszugeben, welcher auf eine vorbestimmte Position auf oder an dem Bauteil 14, insbesondere auf das Leiterendenpaar 20, gerichtet ist. Mit anderen Worten ist die Schweißeinrichtung 16 zum Eintragen von Schweißenergie auf das Bauteil 14, insbesondere das Leiterendenpaar 20, ausgebildet. Die Schweißeinrichtung 16 ist insbesondere dazu eingerichtet, den Schweißstrahl 26 nacheinander auf mehrere Leiterenden 18 zu richten. Beispielsweise kann die Schweißeinrichtung 16 zum Strahlschweißen ausgebildet sein. Besonders bevorzugt kann die Schweißeinrichtung 16 zum Laserstrahlschweißen eingerichtet sein. Alternativ kann die Schweißeinrichtung 16 auch ein WIG- oder Plasma-Schweißgerät aufweisen, wobei die Leiterenden nacheinander in die Schweißzone gefahren werden.

Bei dem in Fig. 1 gezeigten bevorzugten Ausführungsbeispiel weist die Schweißeinrichtung 16 einen Laser zum Erzeugen eines Laserstrahls als Schweißstrahl 26 zum Laserschweißen auf. Bevorzugt wird also ein Strahlschweißverfahren durchgeführt. Der Schweißstrahl 26 weist eine vorbestimmte Energie auf. Die Schweißeinrichtung 16 ist ferner dazu eingerichtet, den Schweißstrahl 26 zu führen oder zu lenken. Beispielsweise kann der Schweißstrahl 26 durch die Schweißeinrichtung 16 entlang einer vorbestimmten Kontur 36 bewegt werden. Das Führen oder Lenken des Schweißstrahls 26 kann durch eine Optik, insbesondere eine Laseroptik, zum Ablenken und Fokussieren des Schweißstrahls 26, insbesondere des Laserstrahls, umgesetzt werden. Wird als Optik beispielsweise eine Laseroptik verwendet, so kann diese insbesondere einen oder mehrere galvanometrisch angetriebene Ablenkspiegel und/oder ein Optikelement zum Fokussieren des Laserstrahls und zum Einstellen des Strahlquerschnitts des Laserstrahls aufweisen. Die Laseroptik kann auch Blenden aufweisen, mit denen der Laserstrahl ganz oder in einstellbarem Ausmaß zum Teil ausgeblendet werden kann. Somit ist die Laseroptik ein Beispiel für eine Einrichtung zum Leiten eines Schweißstrahls 24 auf die Leiterendengruppe 20 und für eine Einrichtung zum Starten, Stoppen, Vergrößern und Verringern des Schweißenergieeintrags auf die Leiterendengruppe 20. Zumindest einige dieser Funktionen können selbstverständlich auch durch andere geeignete Einrichtungen erfüllt werden, wie zum Beispiel am Laser selbst oder am oder im Strahlgang zwischen dem Laser und der Laseroptik.

Die Messeinrichtung 22 ist dazu eingerichtet, einen Messtrahl 28 auszugeben. Hierbei ist die Steuereinrichtung 24 insbesondere dazu eingerichtet, die Messeinrichtung 22 zum Ausgeben des Messtrahls 28 anzusteuern. Beispielsweise kann die Messeinrichtung 22 den Messstrahl 28 vor dem Schweißen ausgeben und so das Bauteil 14 oder die Leiterenden 18 vermessen oder ausmessen oder deren Position bestimmen. Zusätzlich oder alternativ kann die Messeinrichtung 22 dazu eingerichtet sein, den Messtrahl 28 auszugeben, sobald das Schweißen beginnt. Dabei ist die Messeinrichtung 22 dazu eingerichtet, den Messtrahl 28 auf das Bauteil 14, insbesondere auf das Leiterendenpaar 20, zu richten. Die Messeinrichtung 22 ist zudem dazu eingerichtet, den Messstrahl 28 zu führen oder zu lenken. Dabei ist die Messeinrichtung 22 bevorzugt dazu eingerichtet, mit dem Messtrahl 28 das Bauteil 14, insbesondere das Leiterendenpaar 20, nach einem vorbestimmten Muster oder nach vorbestimmten Linien, insbesondere Messlinien oder Maßlinien, abzufahren oder abzuscannen und/oder den Messtrahl 28 an eine vorbestimmte Position zu führen. Beispielsweise kann es sich bei dem vorbestimmten Muster oder den Linien um ein Doppelkreuz, welches auch als Hashtag bezeichnet werden kann, handeln. Beispielsweise kann es sich bei der vorbestimmten Position um eine aktuelle Position des Schweißstrahls 26 oder eine Position eines Laserspots, also der Brennpunkt an dem der Schweißstrahl auf das Bauteil 14 trifft, handeln.

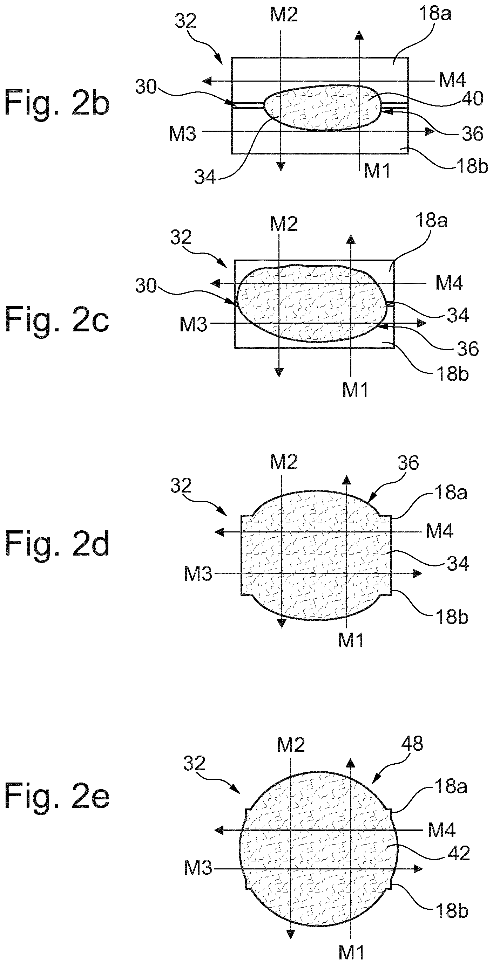

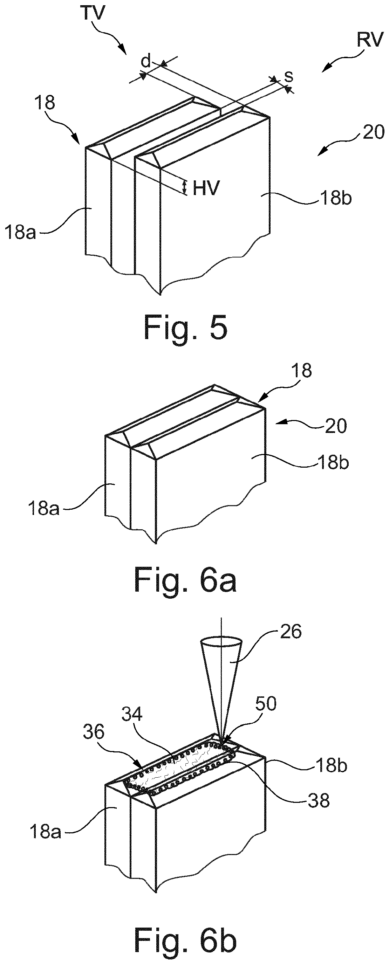

Vor dem Schweißen sind Eingangsparameter des Bauteils 14 oder des zu verschweißenden Leiterendenpaares 20 zu bestimmen oder zu erfassen. Mit anderen Worten kann eine Ausgangssituation des zu verschweißenden Leiterendenpaares 20 erfasst werden. Diese Ausgangssituation oder die Eingangsparameter werden bevorzugt durch die Messeinrichtung 22 erfasst. Bevorzugt wird als Eingangsparameter eine Querschnittsfläche eines Endbereichs 32 der gruppierten Leiterenden 18 oder zumindest eines Leiterendes 18 und/oder ein Abstand zwischen den Leiterenden 18, 18a, 18b oder ein Radialversatz RV, welcher insbesondere bezogen auf die radiale Richtung des eine zentrale Achse aufweisenden Bauteils 14 ist, und/oder ein Spalt 30 zwischen den Leiterenden 18 und/oder ein Höhenversatz HV zwischen den Leiterenden 18 und/oder ein Tangentialversatz TV zwischen den Leiterenden 18 und/oder eine Relativposition der Leiterenden erfasst. Der zumindest eine oder die mehreren Eingangsparameter werden bevorzugt durch die Messeinrichtung 22 erfasst. Die Pinpositionen oder Positionen der Leiterenden 18 können hinsichtlich der Eingangsparameter, besonders bevorzugt hinsichtlich HV, RV und TV, charakterisiert werden. In den Figuren Fig. 2a, Fig. 5, Fig. 6a, Fig. 7a und Fig. 8a sind beispielhaft entsprechende Ausgangssituationen gezeigt, in denen die Leiterenden vor dem Schweißen angeordnet sein können. Insbesondere in Fig. 5 ist speziell der Tangentialversatz TV, der Radialversatz RV und der Höhenversatz hervorgehoben oder verdeutlicht. Beispielsweise kann ein Schweißenergieeintrag zusätzlich oder alternativ abhängig von dem erfassten Eingangsparameter oder den erfassten Eingangsparametern gesteuert werden.

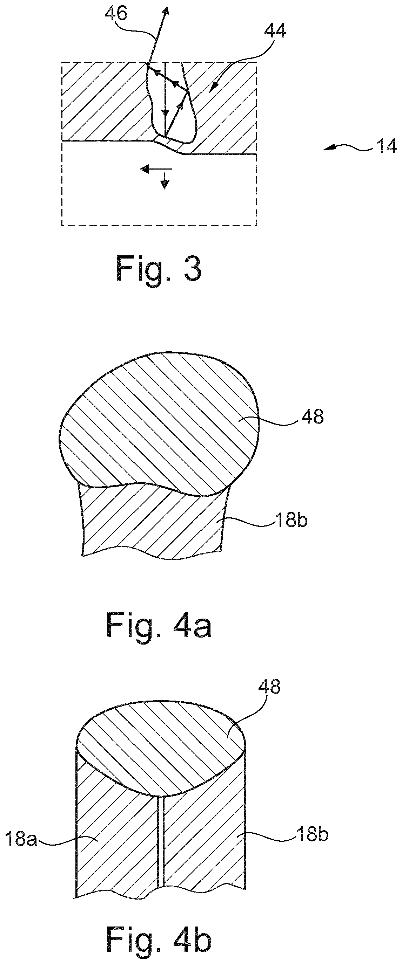

Zudem ist die Messeinrichtung 22 dazu eingerichtet, während dem Schweißen einen ersten Größenparameters und einen zweiten Größenparameter eines beim Schweißen entstehenden Schmelzbades 34 zu erfassen. Mit anderen Worten ist die Messeinrichtung 22 dazu eingerichtet, während dem Schweißen zumindest zwei Größenparameter des Schmelzbades 34 zu erfassen oder zu messen. Als erster Größenparameter wird insbesondere eine Erstreckung oder Ausdehnung oder Länge des Schmelzbades 34 in eine vorbestimmte erste Richtung und eine vorbestimmte zweite Richtung, insbesondere in einer Ebene oder zwei Dimension, erfasst. Beispielsweise wird eine Erstreckung des Schmelzbades 34 in eine x-Richtung, welche sich insbesondere parallel zu einer Querschnittsfläche oder Transversalebene der Leiterenden 18 erstreckt, und in eine y-Richtung, welche sich insbesondere senkrecht zur x-Richtung und/oder parallel zu einer Querschnittsfläche oder Transversalebene der Leiterenden 18 erstreckt, erfasst. Auf die Erfassung der Ausdehnung des Schmelzbades 34 in die x- und y-Richtung wird im Zusammenhang mit den Figuren Fig. 2a bis Fig. 2e im Folgenden genauer eingegangen. Als zweiter Größenparameter wird insbesondere eine Tiefe eines Lochs, insbesondere eines Keyholes 44, an der aktuellen Position des Schweißstrahls 26 erfasst. Mit anderen Worten wird eine Erstreckung oder eine Ausdehnung des Schmelzbades 34 in eine z-Richtung, welche sich insbesondere senkrecht zur x- und y-Richtung oder senkrecht zur Querschnittsfläche oder in eine Haupterstreckungsrichtung der Leiterenden 20 erstreckt, erfasst. Auf die Erfassung der Ausdehnung des Schmelzbades 34 in die z-Richtung wird im Zusammenhang mit Fig. 3 genauer eingegangen. Durch den ersten Größenparameter und den zweiten Größenparameter wird also insbesondere eine Geometrie des Schmelzebades 34 oder eine Schmelzbadgeometrie erfasst oder bestimmt.

Zudem ist die Messeinrichtung 22 dazu eingerichtet, einen Wert des Schmelzbades 34 aus dem ersten Größenparameter und dem zweiten Größenparameter zu bestimmen oder zu ermitteln oder zu berechnen. Als Wert wird insbesondere ein Anbindungsquerschnitt berechnet. Zusätzlich oder alternativ kann auch die Steuereinrichtung 24 dazu eingerichtet sein, den Wert des Schmelzbades 34 zu berechnen. Hierzu kann die Messeinrichtung 22 die erfassten oder bestimmten Größenparameter an die Steuereinrichtung 24 übermitteln oder übertragen.

Schließlich ist die Steuereinrichtung 24 dazu eingerichtet, einen Schweißenergieeintrag abhängig von dem bestimmten Wert des Schmelzbades 34 zu steuern. Der zu bestimmende Wert ergibt sich insbesondere aus dem Eingangsparameter oder -parametern und/oder dem ersten Größenparameterwert und/oder dem zweiten Größenparameterwert. Die Steuereinrichtung 24 oder eine Vergleichseinrichtung (in Figuren nicht gezeigt), welche Teil der Messeinrichtung 22 oder der Steuereinrichtung 24 bilden kann, ist ferner dazu eingerichtet, den bestimmten Wert mit einem Grenzwert, also insbesondere einem vorgegebenen Wert eines Anbindungsquerschnitts, zu vergleichen. Sobald der bestimmte Wert den Grenzwert erreicht hat, steuert die Steuereinrichtung 24 die Schweißeinrichtung 16 an, um den Schweißenergieeintrag, also die Ausgabe des Schweißstrahls 26, zu stoppen. Zusätzlich oder alternativ kann die Steuereinrichtung 24 dazu eingerichtet sein, je nach bestimmtem Wert die Schweißeinrichtung 16 derart anzusteuern, dass ein Schweißenergieeintrag erhöht oder reduziert wird.

Bei dem in Fig. 1 dargestellten bevorzugten Ausführungsbeispiel arbeitet die Messeinrichtung 24 über Laufzeitmessung reflektierter Messstrahlung 28. Besonders bevorzugt arbeitet die Messeinrichtung 22 mittels optischer Kohärenztomografie (OCT). Hierzu weist die Messeinrichtung 22 beispielsweise ein OCT-Gerät. Das OCT-Gerät kann eine Ablenkeinrichtung aufweisen, welche insbesondere auch als Scanner bezeichnet wird. Derartige OCT-Geräte zum Durchführen optischer Kohärenztomografie sind, wie sich zum Beispiel aus der Literaturstelle
[2] "Optische Kohärenztomografie", Eintrag in Wikipedia, wikipedia.org, abgerufen am 12.05.2021
ergibt, für ganz andere Zwecke auf dem Markt erhältlich. Sie werden derzeit in der Medizin, insbesondere zum Erfassen des Augenhintergrunds in der Augenheilkunde, eingesetzt. Mit der Ablenkeinrichtung des OCT-Geräts lässt sich ein Messstrahl 28 des OCT-Geräts über die jeweilige Leiterenden 18 scannen oder leiten. Damit ist die Messeinrichtung 24 dazu eingerichtet, eine Lage der Konturen der einzelnen Leiterenden 18 oder auch die Konturen, die Abmaße und das Volumen des Schmelzbads 34, also den ersten und den zweiten Größenparameter, oder der Schweißperle 42 oder der Schweißnaht 48 zu erfassen.

Im Zusammenhang der Figuren Fig. 2a bis 2e, Fig. 6a bis 6d, Fig. 7a bis 7d, Fig. 8a bis 8d und Fig. 3 soll genauer auf die Erfassung des ersten Größenparameters und des zweiten Größenparameters mittels der Messeinrichtung 22, insbesondere dem OCT-Gerät, genauer eingegangen werden. Vor dem Schweißvorgang werden mit der Messeinrichtung 22 die Positionen und/oder Konturen der ungeschnittenen Hairpins in x-y-z-Richtung, also insbesondere die Positionen der Leiterenden 18a und 18b, zueinander ermittelt. Insbesondere werden hierbei, wie es in Fig. 5 schematisch dargestellt ist, die Eingangsparameter, besonders bevorzugt der Tangentialversatz TV, der Radialversatz, ein Spalt 30 zwischen den Leiterenden 18a, 18b und/oder ein Höhenversatz HV und/oder eine Relativposition, ermittelt oder bestimmt. Diese Ausgangssituation vor dem Schweißen ist in den Figuren Fig. 2a, Fig. 6a, Fig. 7a und Fig. 8a dargestellt. Hierbei emittiert die Messeinrichtung den Messstrahl 28 insbesondere mit einer definierten Wellenlänge, bevorzugt von 840 nm.

Die Messstrategie ist, wie in den Figuren Fig. 2a bis Fig. 2e gezeigt ist, als Doppelkreuz ausgeführt. Das Doppelkreuz weist, wie den Figuren Fig. 2a bis Fig. 2e zu entnehmen ist, vier Linien oder Messlinien M1 bis M4 auf. Insbesondere ist das Doppelkreuz in einer Ebene zu dem Endbereich 32 der Leiterenden 18 relativ zu dem Endbereich 32 angeordnet. Mit anderen Worten kann das Doppelkreuz in einer Ebene mit dem Endbereich 32 oder den Endflächen der Leiterenden 18, 18a, 18b liegen. Mit anderen Worten kann das Doppelkreuz auf den Endbereich 32 der gruppierten Leiterenden 18 gelegt oder projiziert werden. Das Doppelkreuz weist die vier Messlinien M1 bis M4 auf, wobei jeweils zwei in einem vorbestimmten Abstand, also M1-M2 und M3-M4 parallel zueinander angeordnet sind und das jeweilige Linienpaar, von denen die zwei Linien parallel zueinander verlaufen, senkrecht zu dem anderen Linienpaar verläuft oder angeordnet ist, also die beiden Linienpaare in einem Kreuz zueinander angeordnet oder aufgestellt sind.

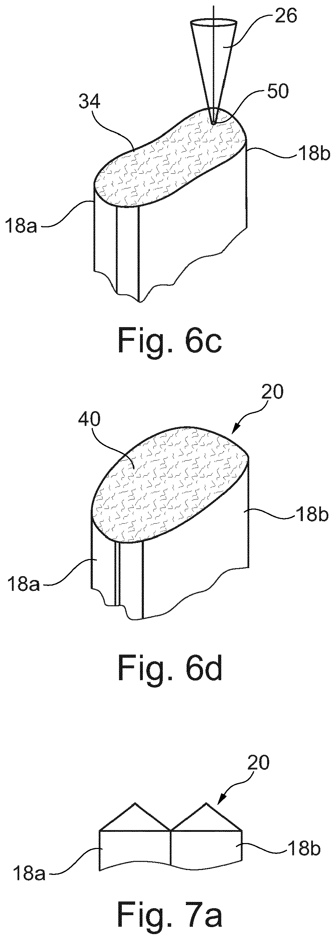

Mittels dieser Messstrategie wird zunächst die Schmelzbaddimension in x- und y-Richtung während dem Schweißen ermittelt. Mit anderen Worten wird insbesondere in einer Ebene oder zwei Dimensionen senkrecht zur Haupterstreckungsrichtung der Leiterenden 18 oder Leiter eine Ausdehnung oder Erstreckung oder Dimension des Schmelzbades 34 als erster Größenparameter ermittelt. Die laterale Erstreckung des Schmelzbades 34 in x- und y-Richtung wird dabei insbesondere über die zwei jeweils in x- und y-Richtung angeordnete Linien, die Messlinien M1 bis M4, mit einem definierten Abstand zueinander, ermittelt. Der Messstrahl 28 wird bei der Messung während dem Schweißen ausschließlich entlang der Messlinien M1 bis M4 geführt. Das Schmelzbad 34 bildet sich während dem Schweißen. Das Schmelzbad 34 wird gebildet, indem der Schweißstrahl 26 auf das Bauteil 14, insbesondere die Leiterenden 18, trifft. Durch eine Ausdehnung des Schmelzbades 34, insbesondere eine Volumenausdehnung im Bereich des Schmelzbades 34, verkürzt sich die gemessene Wegstrecke oder Laufzeit des Messstrahls 28. Damit kann eine geometrische Veränderung des Schmelzbades 34 detektiert werden. Dies kann zusätzlich oder alternativ als Eingangsgröße für die Dimensionierung des Energieeintrages dienen. Die Ausdehnung des Schmelzbades 34 bildet sich insbesondere dadurch, dass der Schweißstrahl 26 entlang der Kontur 36 bewegt wird, also das Bauteil 14, insbesondere die Leiterenden 18 mit einer vorbestimmten Strecke abfährt und in diesem Bereich das Bauteil 14 aufschmilzt. Durch die Ausdehnung des Schmelzbades 34 und mit der damit sich verkürzend gemessenen Wegstrecke oder Laufzeit ist ein Rückschluss auf die Schmelze, also das Schmelzbad 34, innerhalb der Kontur 36 möglich. Das heißt, nach einem vollständigen Konturdurchlauf, kann ermittelt werden, ob die Innenfläche der Kontur 36 vollständig mit Schmelze gefüllt ist. Mit Kontur 36 ist insbesondere eine Strecke gemeint, entlang welcher der Schweißstrahl 26, insbesondere auf den Leiterenden 18 oder dem Endbereich 32 der Leiterenden 18, bewegt wird. Wie insbesondere in Fig. 6b und Fig. 6c gezeigt ist, wird der Schweißstrahl 26 entlang einer vorbestimmten Kontur 36 bewegt. Die Kontur 36 kann auch als Schweißkontur bezeichnet werden. Dabei fährt der Schweißstrahl 26 insbesondere eine elliptische Kontur 36 ab. Während also der Schweißstrahl 26 die vorbestimmte Kontur 36 abfährt, wird gleichzeitig der Messtrahl 28 entlang der Messlinien M1 bis M4 geführt. Ist der Schweißstrahl 26 die vorbestimmte, insbesondere elliptische, Kontur abgefahren, kann der Messstrahl 28, während sich der Schweißstrahl 26 entlang der Kontur 36 Kontur bewegt, die Messlinien M1 bis M4 abfahren und bestimmen, sobald der Schweißstrahl 26 die Kontur 36 komplett abgefahren hat, ob die Kontur 36, also insbesondere das Innere der Kontur 36, mit Schmelze ausgefüllt ist. Der Schweißstrahl 26 kann die Kontur auch mehrfach abfahren. Dabei kann der Schweißstrahl 26 die Kontur 36 oder verschiedene Konturen mehrfach abfahren bis sich das gewünschte Schweißergebnis oder Ausdehnung des Schmelzbades 34 einstellt. In den Figuren Fig. 2b, Fig. 6b, Fig. 7b und Fig. 8b ist gezeigt, wie der Schweißstrahl 26 eine solche Kontur 36 abfährt. An der Position, an der der Schweißstrahl 26 auf das Bauteil 14 trifft bildet sich ein Spot oder ein Brennpunkt. Da als Schweißstrahl 26 ein Laserstrahl verwendet wird, bildet sich ein sogenannter Laserspot 50. Der Laserstrahl wird entlang einer elliptischen Kontur 36 bewegt, solange bis sich ein Schmelzering 38 bildet. Mit der Messstrategie kann während des Schweißprozesses die Prozesszonendimension durch Messung der Dimensionen des Schmelzbads 34 entlang der Messlinien M1 bis M4 iterativ gemessen werden. Damit können definierte Grenzwerte des Anbindungsquerschnittes erreicht werden.

In den Figuren Fig. 2c und Fig. 2d, Fig. 6c und 6d, Fig. 7c und 7d und Fig. 8c und 8d ist der weitere Prozessfortschritt während dem Schweißen verdeutlicht. Darin ist die Vergrößerung der Kontur 36 und das Schmelzbad 34 gezeigt. Fig. 2e zeigt die resultierende Schweißperle 42 und die Schweißnaht 48. In Fig. 4a ist die Schweißnaht 48 in einem Längsschnitt auf eine Ebene des Stoßes dargestellt oder gezeigt oder verdeutlicht. In Fig. 4b ist die Schweißnaht 48 in Querschnitt dargestellt.

Bei der Messstrategie, wie sie in den Figuren Fig. 2b bis Fig. 2e gezeigt ist, ist insbesondere die Kontur 36 über die Lage der Messlinien M1 bis M4 relativ zu den Leiterenden 18 und relativ zueinander angeordnet. Hierbei ist insbesondere ein vorbestimmter Randabstand eingehalten, wobei das Doppelkreuz größer im Vergleich zur Dimension der vorbestimmten Kontur 36 ausgelegt ist. Durch Versuche kann beispielsweise ermittelt werden, welche minimalen Abstände der Messlinien M1 bis M4 benötigt werden oder zueinander einzunehmen haben, um die Schmelzbaddimension in x- und y-Richtung zu ermitteln, mittels denen ein geforderte Anbindungsquerschnitt erreicht wird. Das Doppelkreuz wird zudem umlaufend insbesondere derart gestaltet, sodass minimale Sprungwege und/oder -zeiten resultieren.

Der oder die Eingangsparameter, welche insbesondere vor dem Schweißen bestimmt werden, werden insbesondere ebenfalls durch diese Messstrategie mit den vier Messlinien M1 bis M4 durch die Messeinrichtung 26 bestimmt.

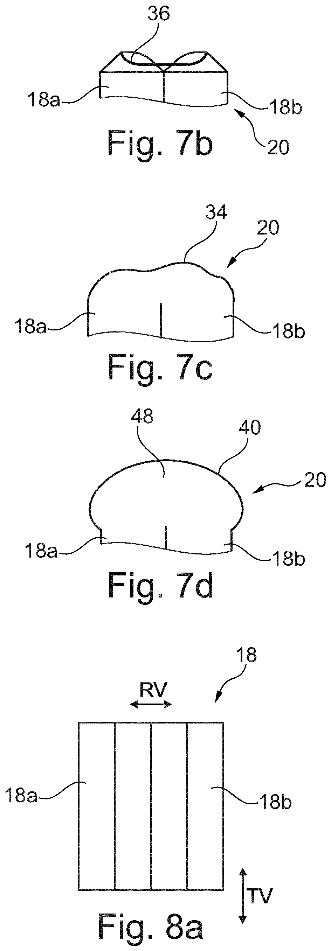

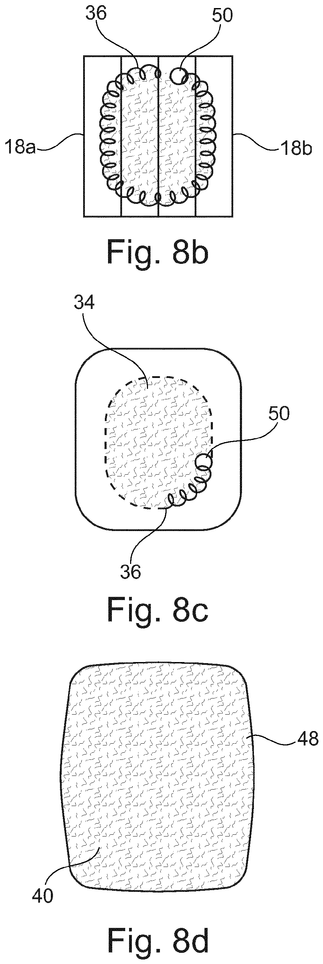

Die Figuren Fig. 6a bis Fig. 6d, Figuren Fig. 7a bis Fig. 7d und Fig. 8a bis Fig. 8d zeigen die Stufen im Schweißprozess, die sich ausgehend von einem Ausgangszustand (Fig. 6a, Fig. 7a und Fig. 8a) über die Bildung eines Schmelzringes 38 und dem Schließen der Schmelzedecke 40 bis hin zu einer, insbesondere vollständigen, Ausprägung einer Perle 42 oder Schmelzeperle ergeben. Die Figuren Fig. 6a, Fig. 7a und Fig. 8a zeigen einen Ausgangszustand vor dem Schweißvorgang. Die Figuren Fig. 6b, Fig. 7b und Fig. 8b zeigen wie der Schweißstrahl 26 entlang der vorbestimmten, elliptischen Kontur 36, geführt wird. Ist der Schweißstrahl 26 die Kontur 36 vollständig abgefahren, so bildet sich ein Schmelzering 38 oder die geschlossene Schmelzekontur. Die Figuren Fig. 6c, Fig. 7c und Fig. 8c zeigen die geschlossene Schmelzdecke 40 oder das Schmelzbad 34 innerhalb der Kontur 36. Die Figuren Fig. 6d, Fig. 7d und Fig. 8d zeigen eine Ausprägung einer Schweißperle 42.

Nach einem vollständigen Durchlauf des Doppelkreuzes, wie es in den Figuren Fig. 2a bis Fig. 2e gezeigt ist, wird mittels der Messeinrichtung 26 zur Vermessung des Keyholes 44, wie es in Fig. 3 gezeigt ist, gewechselt. Dabei wird der Messstrahl 28 zu einer aktuellen Position des Laserspots 50, also der Punkt oder die Position oder Stelle, an der der Laserstrahl auf die Leiterenden 18 trifft, geführt oder springt an die Position des Laserspots 50. Hierbei wird ein Messstrahl 28 in einer bestimmten Wellenlänge emittiert. An dieser Position oder Stelle misst oder bestimmt die Messeinrichtung 22, insbesondere das OCT-Gerät, eine Tiefe des Keyholes 44 als zweiten Größenparameterwert. Die Messeinrichtung 22 bestimmt die Keyholetiefe über eine Berechnung der Laufzeit des reflektierten Signals 46, wie es in Fig. 3 schematisch dargestellt ist. Daraus kann eine Höheninformation des Bauteils 14 in z-Richtung ermittelt werden. Mit anderen Worten kann über die Laufzeit der reflektierten Strahlung eine Höheninformation generiert werden. Diese Höheninformation korreliert insbesondere mit einer Erstreckung oder Höhe oder Tiefe des Schmelzbades 34 in z-Richtung. Damit kann eine geometrische Veränderung des Schmelzbades 5 detektiert werden. Diese kann als Eingangsgröße für die Dimensionierung des Energieeintrages dienen.

Die Ermittlung der Schmelzbaddimension ist insbesondere erforderlich, da es Fälle gibt, in denen nicht der gesamte Drahtquerschnitt aufgeschmolzen wird, beispielsweise bei einem breiten Spalt, in dem die Schmelze in den Spalt fliest. Im Fall zu großer Linienabstände kann es bei hohem Spaltmaß dazu kommen, dass die Schmelze die Messlinien M1 bis M4 nicht erreicht und somit zu viel Energie, also Schweißenergie, eingebracht werden würde, obwohl bereits vor dem Erreichen ein ausreichender Anbindungsquerschnitt vorliegt.

Nach dem Messen mittels der Messeinrichtung 22 sind die Schmelzbaddimension in x- und y-Richtung, also der erste Größenparameter, und die ortsbezogene Tiefe des Schmelzbades 34, also der zweite Größenparameter, bekannt. Daraus wird mittels geometrischer Betrachtung das Schmelzevolumen und/oder Anbindungsquerschnitt, also der Wert, berechnet oder bestimmt. Alternativ kann mithilfe des Schmelzevolumens der Anbindungsquerschnitt bestimmt werden. Das Schmelzevolumen und/oder der Anbindungsquerschnitt kann von der Messeinrichtung 22 oder der Steuereinrichtung 24 bestimmt werden. Abhängig vom Messfortschritt und dem Fortschritt des Aufschmelzens wird bevorzugt die Zunahme des Schmelzevolumens bestimmt und damit der Anbindungsquerschnitt. Bei Erreichen eines Grenzwertes wird die Emission der Laserenergie gestoppt. Bei dem Messverfahren können also zunächst die Messlinien M1 bis M4 abgefahren werden und anschließend kann mit dem Messtrahl 28 zur aktuellen Position des Schweißstrahls 26 übergegangen werden. Diese Messschritte können einmal oder mehrfach, insbesondere in dieser Reihenfolge, wiederholt werden.

Im Falle von geometrischen symmetrischen Positionsunterschieden der zu verschweißenden Leiterenden 18, entsteht ein asymmetrisches Schmelzbad 34 entlang der Kontaktfläche, da die Energieeinbringung symmetrisch erfolgt, zum Beispiel über elliptische Konturen und die Wärmeleitung im Falle gleicher Bestrahlungsanteile zur gleichmäßigen Energieverteilung in die beiden Leiterenden 18a, 18b führt.

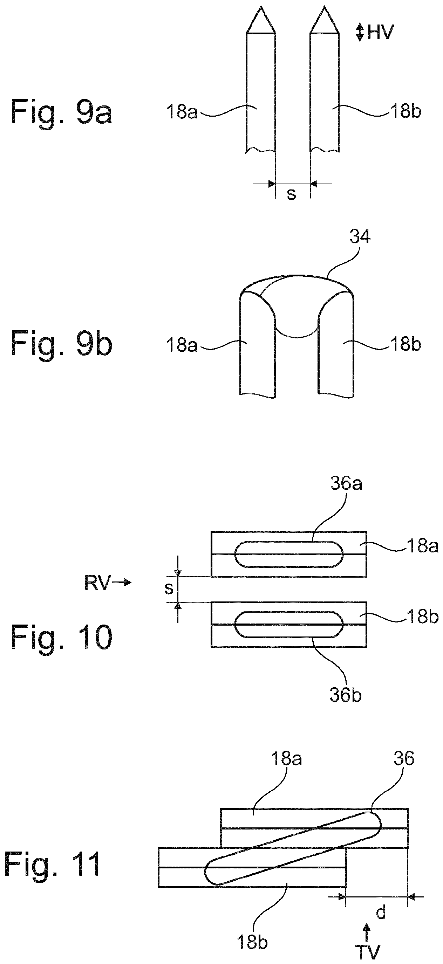

Figuren Fig. 9a und 9b, Fig. 10 und Fig. 11 zeigen drei Fälle, in denen der Bestrahlungsort und die Flächenenergie oder der Schweißenergieeintrag in Abhängigkeit des Drahtquerschnittes oder des Querschnittes der Leiterenden 18, 18a, 18b und des Messsignals (OCT) 46 gesteuert wird.

Fall A ist in den Figuren Fig. 9a und 9b gezeigt. Dieser Fall stellt einen Höhenversatz HV dar, deutlich größer, wie er in Fig. 5 oder Fig. 2a oder Fig. 6a gezeigt ist. Fall B ist in Fig. 10 gezeigt. Dieser Fall stellt einen Radialversatz RV dar. Der Radialversatz RV bezieht sich auf die radiale Richtung des eine zentrale Achse aufweisenden Bauteils 14. Fall C ist in Fig. 11 gezeigt. Dieser Fall stellt einen Tangentialversatz TV zwischen den Leiterenden dar.

Je nach Fall (A-C) erfolgt eine Implementierung der Flächenenergie oder Schweißenergieeintrags entsprechend der vorliegenden geometrischen Randbedingungen (A-C), sodass eine homogene Schweißperle 42 entsteht oder gebildet wird.

Im Fall A eines Höhenversatzes HVwird der Hauptanteil der Energie, also des Schweißenergieeintrags, auf das höherstehende Leiterende oder den höherstehenden Pin, also in dem Fall Leiterende 18a, eingebracht, sodass ein identisches Höhenniveau beider verschweißten Leiterenden 18 vorliegt. Bei einer Spaltüberfahrt, also insbesondere einer Fahrt des Schweißstrahls 26 von einem Leiterende 18a zum anderen Leiterende 18b, wird hierbei die Keyholetiefe gemessen und als Messgröße, also zweiten Größenparameter, für die Berechnung der Anbindungsfläche oder des Anbindungsquerschnitts herangezogen.

Im Fall B von einem radialen Versatz oder Radialversatz RV erfolgt ein Implizieren von zwei pinbezogenen Schweißkonturen zur Vermeidung eines Energieeintrages in den Spalt. Das heißt auf dem ersten Leiterende 18a wird eine erste Schweißkontur 36a und auf dem zweiten Leiterende 18b wird eine zweite Schweißkontur 36b durch die Schweißeinrichtung 16 gebildet. Die Steuereinrichtung 24 kann dabei dazu eingerichtet sein, die Schweißeinrichtung 16 derart anzusteuern, dass zwei Schweißstrahlen auf die gruppierten Leiterenden 18 gerichtet werden, wobei ein Schweißstrahl einem Leiterende 18a, 18b der gruppierten Leiterenden 18 und der zweite Schweißstrahl einem weiteren Leiterende 18a, 18b der gruppierten Leiterenden 18 zugeordnet ist. Insbesondere kann die Schweißeinrichtung 16 dazu eingerichtet sein, jeweils einen Schweißstrahl 26 sequenziell oder zwei Schweißstrahlen simultan auf die Leiterenden zu lenken. Besonders bevorzugt wird der Schweißstrahl 26 zunächst auf das erste Leiterende 18a und anschließend auf das zweite Leiterende 18b gelenkt. Die Messkontur in Form eines Doppelkreuzes kann beibehalten werden. Hierbei ist der Zeitpunkt zu tracken, an dem sich beide Einzelschmelzbäder zu einem gemeinsamen Schmelzbad 34 vereinen. Mit anderen Worten kann ein Zeitpunkt erfasst werden, an dem sich die zwei Einzelschmelzbäder zu einem Schmelzbad 36 vereinen, wobei das erste Schmelzbad dem ersten Leiterende 18a und das zweite Schmelzbad dem zweiten Leiterende 18b zugeordnet ist. In Bezug auf die Messung der Schmelzbadtiefe, kann in Fall B die Keyholetiefe nicht als Bewertungsgröße herangezogen werden, da das Keyhole nach unten geöffnet ist, sodass eine geringe oder keine Signalantwort zurückkommt. Die Information bezüglich der Schmelzbadtiefe im Spalt, also der zweiten Größenparameterwert, ist hierbei von der Schmelzbadtiefe auf der Pinoberfläche, also einer Oberfläche der Leiterenden 18 oder des jeweiligen Leiterendes, zu ziehen.

Im Fall C des Tangentialversatzes TV erfolgt eine Verteilung der Flächenenergie oder Schweißenergieeintrags entsprechend des vorliegenden tangentialen Versatzes. Bei Verwendung von elliptischen Schweißkonturen, ist die Längsachse entsprechend zu rotieren, sodass diese die Mittelpunkte der Einzelpins oder Leiterenden schneidet. Die elliptische Schweißkontur verläuft insbesondere um die Mittelpunkte der jeweiligen Leiterenden. Die elliptische Schweißkontur ist in einem vorbestimmten Winkel geneigt zu einer Längsachse der Leiterenden angeordnet. Demnach ist die Kontur des Doppelkreuzes winklig anzustellen. Dabei kann das Doppelkreuz so angestellt sein, dass eine durch die Linien eingeschlossene Form oder Fläche oder die Linien eine rautenförmige Form oder Kontur aufweist bilden. Analog zu Fall A), also bei einem Höhenversatz, wird die Stoßebene der Fügepartner, also insbesondere der Leiterenden, zur Bewertung der Prozesszonentiefe herangezogen.

Die Randbedingungen A bis C können in unterschiedlichen Kombinationen zueinander vorliegen und somit kann das Verfahren entsprechend den Randbedingungen, wie oben beschrieben, kombiniert werden.

### Bezugszeichenliste:

- 10: Schweißanordnung
- 12: Schweißvorrichtung
- 14: Bauteil
- 16: Schweißeinrichtung
- 18: Leiterenden
- 18a: erstes Leiterende
- 18b: zweites Leiterende
- 20: Leiterendenpaar
- 22: Messeinrichtung
- 24: Steuereinrichtung
- 26: Schweißstrahl
- 28: Messstahl
- 30: Spalt
- 32: Endbereich
- 34: Schmelzbad
- 36: Kontur
- 36a: erste Kontur
- 36b: zweite Kontur
- 38: Schmelzring
- 40: Schmelzdecke
- 42: Perle
- 44: Keyhole
- 46: Signal
- 48: Schweißnaht
- 50: Laserspot
- HV: Höhenversatz
- M1: erste Messlinien
- M2: zweite Messlinien
- M3: dritte Messlinien
- M4: vierte Messlinien
- RV: Radialversatz
- TV: Tangentialversatz

## Patentansprüche

1. Schweißverfahren zum Verschweißen von gruppierten Leiterenden (18, 18a, 18b) eines Bauteils (14) für eine elektrische Maschine mittels einer Schweißvorrichtung (12),
**gekennzeichnet durch** die folgenden Schritte:
Erfassen einer Relativposition eines ersten Leiterendes und eines zweiten Leiterendes von gruppierten Leiterenden durch Positionsmessen mittels optischer Messverfahren,
a) Erfassen eines ersten Größenparameters eines beim Schweißen entstehenden Schmelzbades (34);
b) Erfassen eines zweiten Größenparameters des beim Schweißen entstehenden Schmelzbades (34);
c) Bestimmen eines Wertes des Schmelzbades (34) aus dem ersten Größenparameter, und dem zweiten Größenparameter, und
d) Steuern eines Schweißenergieeintrags abhängig von dem bestimmten Wert des Schmelzbades (34).

2. Schweißverfahren nach Anspruch 1, **dadurch gekennzeichnet, dass** Schritt a) wenigstens einen oder mehrere der folgenden Schritte umfasst:
a1) Erfassen des ersten Größenparameters mittels optischer Messverfahren;
a2) Erfassen des ersten Größenparameters mittels Laufzeitmessung reflektierter Strahlung;
a3) Durchführen einer optischen Kohärenztomographie;
a4) Anordnen eines Doppelkreuzes relativ zu den gruppierten Leiterenden (18, 18a, 18b), insbesondere relativ zu einem Endbereich (32) der gruppierten Leiterenden (18, 18a, 18b), und Anordnen von Linien (M1, M2, M3, M4) des Doppelkreuzes relativ zueinander, insbesondere in einem vorbestimmten Abstand zueinander;
a5) Ausbilden eines Doppelkreuzes, welches insbesondere einem Endbereich (32) der gruppierten Leiterenden (18, 18a, 18b) zugeordnet ist, größer als eine Schweißkontur (36);
a6) Ausbilden eines Doppelkreuzes derart, dass ein Messtrahl (28), welcher entlang der Linien (M1, M2, M3, M4) des Doppelkreuzes führbar ist, vorbestimmte Sprungwege und/oder Sprungzeiten aufweist;
a7) Leiten, insbesondere wechselweises Leiten, eines Messstrahls (28) auf unterschiedliche Leiterenden (18, 18a, 18b);
a8) Leiten eines Messstrahls (28) auf die gruppierten Leiterenden (18, 18a, 18b) in wenigstens zwei Dimensionen;
a9) Leiten eines Messstrahls (28) auf ein erstes Leiterende (18a) der gruppierten Leiterenden (18, 18a, 18b), insbesondere einen ersten Endbereich des ersten Leiterendes (18a), und auf ein zweites Leiterende (18b) der gruppierten Leiterenden (18, 18a, 18b), insbesondere einen zweiten Endbereich des zweiten Leiterendes (18b), in wenigstens zwei Dimensionen;
a10) Abfahren eines Messstrahls (28) entlang eines Doppelkreuzes, welches den gruppierten Leiterenden (18, 18a, 18b) zugeordnet ist, wobei das Doppelkreuz jeweils zwei in x- und y-Richtung angeordnete Linien (M1, M2, M3, M4) umfasst, welche insbesondere in einem vorbestimmten Abstand zueinander angeordnet sind;
a11) Erfassen einer, insbesondere lateralen, Erstreckung des Schmelzbades (34) als ersten Größenparameter, insbesondere in einer Ebene der gruppierten Leiterenden (18, 18a, 18b);
a12) Erfassen zumindest eines Eingangsparameters, wobei als der zumindest eine Eingangsparameter eine Querschnittsfläche eines Endbereichs (32) der gruppierten Leiterenden (18, 18a, 18b) oder zumindest eines Leiterendes (18, 18a, 18b) und/oder ein Abstand (s) zwischen den Leiterenden (18, 18a, 18b), insbesondere vor dem Schweißen, und/oder ein Höhenversatz (HV) zwischen den Leiterenden (18, 18a, 18b) und/oder ein Tangentialversatz (TV) und/oder ein Radialversatz (RV) erfasst wird, wobei insbesondere der zumindest eine Eingangsparameter zum Bestimmen des Wertes erfasst wird.

3. Schweißverfahren nach einem der vorhergehenden Ansprüche, **dadurch gekennzeichnet, dass** Schritt b) wenigstens einen oder mehrere der folgenden Schritte umfasst:
b1) Erfassen des zweiten Größenparameters mittels optischer Messverfahren;
b2) Erfassen des zweiten Größenparameters mittels Laufzeitmessung reflektierter Strahlung;
b3) Durchführen einer optischen Kohärenztomographie;
b4) Erfassen des zweiten Größenparameters an einer Position eines Schweißstrahls (26);
b5) Führen oder Leiten eines Messstrahls (28) zu einer, insbesondere aktuellen, Position eines Schweißstrahls (26);
b6) Erfassen einer Tiefe eines Lochs oder einer Dampfkapillare oder eines Dampfkanals, insbesondere eines Keyholes (44), an einer Position eines Schweißstrahls (26);
b7) Erfassen einer Tiefe eines Lochs oder einer Dampfkapillare oder eines Dampfkanals, insbesondere eines Keyholes (44), an einer Position eines Schweißstrahls (26) in eine Haupterstreckungsrichtung der gruppierten Leiterenden (18, 18a, 18b);
b8) Erfassen einer Tiefe eines Lochs oder einer Dampfkapillare oder eines Dampfkanals, insbesondere eines Keyholes (44), in eine Strahlrichtung eines Schweißstrahls (26);
b9) Erfassen einer Spalttiefe bei einer Spaltüberfahrt eines Messtrahls (28) und/oder Schweißstrahls (26);
b10) Erfassen einer Schmelzbadtiefe;
b11) Erfassen einer Schmelzbadtiefe auf einer Oberfläche zumindest eines Leiterendes (18, 18a, 18b) oder der gruppierten Leiterenden (18, 18a, 18b), insbesondere an einem Endbereich (32) der gruppierten Leiterenden (18, 18a, 18b);
b12) Erfassen einer Einschweißtiefe an einer Position eines Schweißstrahls (26);
b13) Korrelieren einer erfassten Tiefe an einer Position eines Schweißstrahls (26) mit einer Höheninformation in eine Haupterstreckungsrichtung der gruppierten Leiterenden (18, 18a, 18b);
b14) Erfassen zumindest eines Eingangsparameters, wobei als der zumindest eine Eingangsparameter eine Querschnittsfläche eines Endbereichs (32) der gruppierten Leiterenden (18, 18a, 18b) oder zumindest eines Leiterendes (18, 18a, 18b) und/oder ein Abstand (s) zwischen den Leiterenden (18, 18a, 18b), insbesondere vor dem Schweißen, und/oder ein Höhenversatz (HV) zwischen den Leiterenden (18, 18a, 18b) und/oder ein Tangentialversatz (TV) und/oder ein Radialversatz (RV) erfasst wird, wobei insbesondere der zumindest eine Eingangsparameter zum Bestimmen des Wertes erfasst wird.

4. Schweißverfahren nach einem der vorhergehenden Ansprüche,
**dadurch gekennzeichnet, dass** Schritt c) wenigstens einen oder mehrere der folgenden Schritte umfasst:
c1) Bestimmen einer Schmelzbaddimension des Schmelzbades (34) als Wert des Schmelzbades;
c2) Bestimmen einer Zunahme eines Schmelzvolumens als Wert des Schmelzbades (34);
c3) Bestimmen eines Anbindungsquerschnitts der gruppierten Leiterenden (18, 18a, 18b) als Wert des Schmelzbades (34).

5. Schweißverfahren nach einem der vorhergehenden Ansprüche, **dadurch gekennzeichnet, dass** Schritt d) wenigstens einen oder mehrere der folgenden Schritte umfasst:
d1) Leiten eines Schweißstrahls (26) auf die gruppierten Leiterenden (18, 18a, 18b);
d2) Leiten eines Schweißstrahls (26), insbesondere wiederholtes Leiten, entlang einer symmetrischen Kontur (36);
d3) Leiten eines Schweißstrahls (26), insbesondere wiederholtes Leiten, entlang einer elliptischen Kontur (36);
d4) Bilden eines Schmelzringes (38) mittels eines Schweißstrahls (26);
d5) Bilden einer Schmelzdecke (40) oder eines Schmelzbades (34) mittels eines Schweißstrahls (26);
d6) Bilden einer Schweißperle (48);
d7) Starten des Schweißenergieeintrags auf die gruppierten Leiterenden (18, 18a, 18b);
d8) Stoppen des Schweißenergieeintrags auf die gruppierten Leiterenden (18, 18a, 18b);
d9) Stoppen des Schweißenergieeintrags auf die gruppierten Leiterenden (18, 18a, 18b), wenn der bestimmte Wert einen Grenzwert erreicht;
d10) Anpassen, insbesondere Vergrößern oder Verringern, des Schweißenergieeintrags auf die gruppierten Leiterenden (18, 18a, 18b);
d11) Einbringen eines vorbestimmten, insbesondere höheren, Schweißenergieeintrags bei einem Höhenversatz (HV) zwischen den Leiterenden (18, 18a, 18b) auf das in eine Haupterstreckungsrichtung der gruppierten Leiterenden (18, 18a, 18b) weiter oder höher erstreckende Leiterende (18, 18a, 18b);
d12) Verteilen eines Schweißenergieeintrags entsprechend eines tangentialen Versatzes (TV) zwischen den Leiterenden (18, 18a, 18b);
d13) Leiten von zwei Schweißstrahlen, insbesondere sequenzielles Leiten eines Schweißstrahls (26) oder simultanes Leiten von zwei Schweißstrahlen, auf die gruppierten Leiterenden (18, 18a, 18b), wobei ein Schweißstrahl (26) einem Leiterende (18a, 18b) der gruppierten Leiterenden (18, 18a, 18b) und der zweite Schweißstrahl (26) einem weiteren Leiterende (18a, 18b) der gruppierten Leiterenden (18, 18a, 18b) zugeordnet ist;
d14) Erfassen eines Zeitpunktes an dem sich zwei Einzelschmelzbäder zu einem Schmelzbad (34) vereinen, wobei das erste Schmelzbad einem ersten Leiterende (18a) und das zweite Schmelzbad dem zweiten Leiterende (18b) zugeordnet ist;
d15) Verschweißen der Leiterenden (18, 18a, 18b), insbesondere an einem Endbereich (32) und/oder stirnseitig, in einem Parallelstoß.

6. Schweißverfahren nach einem der vorhergehenden Ansprüche, **dadurch gekennzeichnet, dass** das Erfassen der Relativposition weiter wenigstens einen oder mehrere der folgenden Schritte umfasst:
6.1 Positionsmessen mittels Laufzeitmessung reflektierter Strahlung;
6.2 Durchführen einer optischen Kohärenztomographie;
6.3 Wechselweises Leiten eines Messstrahls (28) auf unterschiedliche Leiterendengruppen, welche zumindest ein gruppiertes Leiterende (18, 18a, 18b) aufweisen;
6.4 Vermessen von Abständen oder Strecken in wenigstens zwei Dimensionen an einer Leiterendengruppe;
6.5 Vermessen eines Abstandes oder einer Strecke in Richtung der Erstreckung der die Leiterenden (18, 18a, 18b) aufweisenden Leiterabschnitte;
6.6 Ermitteln eines Abstands (s) zwischen den Leiterenden (18, 18a, 18b);
6.7 Messen eines Höhenversatzes (HV) zwischen den Leiterenden (18, 18a, 18b);
6.8 Ermitteln einer Querschnittsfläche eines Endbereichs (32) der gruppierten Leiterenden (18, 18a, 18b) oder zumindest eines Leiterendes der Leiterenden (18, 18a, 18b);
6.9 Ermitteln eines tangentialen Versatzes (TV) zwischen den Leiterenden (18, 18a, 18b);
6.10 Ermitteln eines radialen Versatzes (RV) zwischen den Leiterenden (18, 18a, 18b);
6.11 Messen einer Dicke, einer Breite und/oder einer Höhe eines Endbereichs (32) an der Leiterendengruppe;
6.12 Erfassen zumindest eines Eingangsparameters, wobei als der zumindest eine Eingangsparameter eine Querschnittsfläche eines Endbereichs (32) der gruppierten Leiterenden (18, 18a, 18b) oder zumindest eines Leiterendes (18, 18a, 18b) und/oder ein Abstand (s) zwischen den Leiterenden (18, 18a, 18b), insbesondere vor dem Schweißen, und/oder ein Höhenversatz (HV) zwischen den Leiterenden (18, 18a, 18b) und/oder ein Tangentialversatz (TV) und/oder ein Radialversatz (RV) erfasst wird, wobei insbesondere der zumindest eine Eingangsparameter zum Bestimmen des Wertes erfasst wird.

7. Schweißverfahren nach einem der voranstehenden Ansprüche, **dadurch gekennzeichnet, dass**
7.1 der erste Größenparameter, der zweite Größenparameter, eine Erstreckung des Schmelzbades (34), eine Tiefe eines Dampfkanals oder einer Dampfkapillare an der Position des Schweißstrahls (26), zumindest ein Spaltmaß und/oder der Wert zu korrespondierenden Größen und/oder Datensätze aus Vorversuchen korreliert wird und/oder
7.2 ein Trainingsdatensatz für neuronale Netze gebildet wird, wobei der Trainingsdatensatz den ersten Größenparameter, den zweiten Größenparameter, eine Erstreckung des Schmelzbades (34), eine Tiefe eines Dampfkanals oder einer Dampfkapillare an der Position des Schweißstrahls (26), zumindest ein Spaltmaß, den Wert und/oder Datensätzen aus Vorversuchen umfasst.

8. Schweißvorrichtung (12) zum Verschweißen von gruppierten Leiterenden (18, 18a, 18b) eines Bauteils (14) für eine elektrische Maschine, umfassend:
eine Schweißeinrichtung (16) zum Eintragen von Schweißenergie auf gruppierte Leiterenden (18, 18a, 18b);
**gekennzeichnet durch**:
eine Messeinrichtung (22) zum Erfassen einer Relativposition eines ersten Leiterendes und eines zweiten Leiterendes von gruppierten Leiterenden durch Positionsmessen mittels optischer Messverfahren, wobei
die Messeinrichtung (22) ferner zum Erfassen eines ersten Größenparameters eines beim Schweißen entstehenden Schmelzbades (34) und eines zweiten Größenparameters des beim Schweißen entstehenden Schmelzbades (34) ausgebildet ist, wobei
die Messeinrichtung (22) ferner dazu eingerichtet ist, einen Wert des Schmelzbades (34) aus dem ersten Größenparameter, und dem zweiten Größenparameter zu bestimmen und eine Steuereinrichtung (24), die dazu ausgelegt ist, die Schritte des Verfahrens nach Anspruch 1 durchzuführen, um einen Schweißenergieeintrag auf die zu verschweißenden Leiterenden (18, 18a, 18b) abhängig von dem bestimmten Wert zu steuern.

9. Schweißvorrichtung (12) nach Anspruch 8, **dadurch gekennzeichnet, dass** die Messeinrichtung (22)
9.1 zum Bewerten des Schweißergebnisses ausgebildet ist; und/oder
9.2 eine Vergleichseinrichtung zum Vergleichen des Wertes mit einem vorbestimmten Grenzwert umfasst.

10. Schweißvorrichtung (12) nach Anspruch 8 oder 9, **dadurch gekennzeichnet, dass** die Messeinrichtung (22) ausgewählt ist aus einer Gruppe von Messeinrichtungen, die umfasst:
10.1 Messeinrichtung (22) zum Erfassen des ersten Größenparameters mittels optischer Messverfah ren;
10.2 Messeinrichtung (22) zum Erfassen des ersten Größenparameters mittels Laufzeitmessung reflektierter Strahlung;
10.3 Messeinrichtung (22) zum Durchführen einer optischen Kohärenztomographie;
10.4 Messeinrichtung (22) zum Anordnen eines Doppelkreuzes relativ zu den gruppierten Leiterenden (18, 18a, 18b), insbesondere einem Endbereich (32) der gruppierten Leiterenden (18, 18a, 18b), und Anordnen von Linien (M1, M2, M3, M4) des Doppelkreuzes relativ zu einander, insbesondere in einem vorbestimmten Abstand;
10.5 Messeinrichtung (22) zum Ausbilden eines Doppelkreuzes, welches insbesondere einem Endbereich (32) der gruppierten Leiterenden (18, 18a, 18b) zugeordnet ist, größer als eine Schweißkontur (36);
10.6 Messeinrichtung (22) zum Ausbilden eines Doppelkreuzes derart, dass ein Messtrahl (28), welcher entlang der Linien (M1, M2, M3, M4) des Doppelkreuzes führbar ist, vorbestimmte Sprungzeiten und/oder Sprungwege aufweist;
10.7 Messeinrichtung (22) zum Leiten, insbesondere wechselweisen Leiten, eines Messstrahls (28) auf unterschiedliche Leiterenden (18, 18a, 18b);
10.8 Messeinrichtung (22) zum Leiten eines Messstrahls (28) auf die gruppierten Leiterenden (18, 18a, 18b) in wenigstens zwei Dimensionen;
10.9 Messeinrichtung (22) zum Leiten eines Messstrahls (28) auf ein erstes Leiterende (18a) der gruppierten Leiterenden (18, 18a, 18b), insbesondere einen ersten Endbereich des ersten Leiterendes (18a), und auf ein zweites Leiterende (18b) der gruppierten Leiterenden (18, 18a, 18b), insbesondere einen zweiten Endbereich des zweiten Leiterendes (18b), in wenigstens zwei Dimensionen;
10.10 Messeinrichtung (22) zum Abfahren eines Messstrahls (28) entlang eines Doppelkreuzes, welches den gruppierten Leiterenden (18, 18a, 18b) zugeordnet ist, wobei das Doppelkreuz jeweils zwei in x- und y-Richtung angeordnete Linien (M1, M2, M3, M4) umfasst, welche insbesondere in einem vorbestimmten Abstand zueinander angeordnet sind;
10.11 Messeinrichtung (22) zum Erfassen einer, insbesondere lateralen, Erstreckung des Schmelzbades (34) als ersten Größenparameter, insbesondere in einer Ebene der gruppierten Leiterenenden (18, 18a, 18b);
10.12 Messeinrichtung (22) zum Erfassen zumindest eines Eingangsparameters, wobei als der zumindest eine Eingangsparameter eine Querschnittsfläche eines Endbereichs der Leiterendengruppe oder zumindest eines Leiterendes und/oder ein Abstand zwischen den Leiterenden, insbesondere vor dem Schweißen, und/oder ein Höhenversatz (HV) zwischen den Leiterenden und/oder ein Tangentialversatz (TV) und/oder ein Radialversatz (RV) erfasst wird;
10.13 eine Kombination einer oder mehrerer der Messeinrichtungen gemäß 10.1 bis 10.12.

11. Schweißvorrichtung nach einem der Ansprüche 8 bis 10, **dadurch gekennzeichnet, dass** die Messeinrichtung (22) ausgewählt ist aus einer Gruppe von Messeinrichtungen, die umfasst:
11.1 Messeinrichtung (22) zum Erfassen des zweiten Größenparameters mittels optischer Messverfah ren;
11.2 Messeinrichtung (22) zum Erfassen des zweiten Größenparameters mittels Laufzeitmessung reflektierter Strahlung;
11.3 Messeinrichtung (22) zum Durchführen einer optischen Kohärenztomographie;
11.4 Messeinrichtung (22) zum Führen eines Messstrahls (28) zu einer Position eines Schweißstrahls (26);
11.5 Messeinrichtung (22) zum Erfassen des zweiten Größenparameters an einer Position eines Schweißstrahls (26);
11.6 Messeinrichtung (22) zum Erfassen einer Tiefe eines Lochs oder einer Dampfkapillare oder eines Dampfkanals, insbesondere eines Keyholes (44), an einer Position eines Schweißstrahls (26);
11.7 Messeinrichtung (22) zum Erfassen einer Tiefe eines Lochs oder einer Dampfkapillare oder eines Dampfkanals, insbesondere eines Keyholes (44), an einer Position eines Schweißstrahls (26) in eine Haupterstreckungsrichtung der gruppierten Leiterenden (18, 18a, 18b);
11.8 Messeinrichtung (22) zum Erfassen einer Spalttiefe bei einer Spaltüberfahrt eines Messtrahls (28) und/oder eines Schweißstrahls (26);
11.9 Messeinrichtung (22) zum Erfassen einer Schmelzbadtiefe;
11.10 Messeinrichtung (22) zum Erfassen einer Schmelzbadtiefe auf einer Oberfläche zumindest eines Leiterendes oder der gruppierten Leiterenden (18, 18a, 18b);
11.11 Messeinrichtung (22) zumindest eines Eingangsparameters, wobei als der zumindest eine Eingangsparameter eine Querschnittsfläche eines Endbereichs (32) der gruppierten Leiterenden (18, 18a, 18b) oder zumindest eines Leiterendes (18, 18a, 18b) und/oder ein Abstand (s) zwischen den Leiterenden (18, 18a, 18b), insbesondere vor dem Schweißen, und/oder ein Höhenversatz (HV) zwischen den Leiterenden (18, 18a, 18b) und/oder ein Tangentialversatz (TV) und/oder ein Radialversatz (RV) erfasst wird, wobei der zumindest eine Eingangsparameter zum Bestimmen des Wertes erfasst wird;
11.12 eine Kombination einer oder mehrerer der Messeinrichtungen gemäß 11.1 bis 11.11.

12. Schweißvorrichtung (12) nach einem der Ansprüche 8 bis 11, **dadurch gekennzeichnet, dass** die Messeinrichtung (22) ausgewählt ist aus einer Gruppe von Messeinrichtungen, die umfasst:
12.1 eine Messeinrichtung (22) zum Bestimmen einer Schmelzbaddimension des Schmelzbades (34) als Wert des Schmelzbades (34);
12.2 eine Messeinrichtung (22) zum Bestimmen einer Zunahme eines Schmelzvolumens als Wert des Schmelzbades (34);
12.3 eine Messeinrichtung (22) zum Bestimmen eines Anbindungsquerschnitts der gruppierten Leiterenden (18, 18a, 18b) als Wert des Schmelzbades (34);
12.4 eine Kombination einer oder mehrerer der Messeinrichtungen gemäß 12.1 bis 12.3.

13. Schweißvorrichtung nach einem der Ansprüche 8 bis 12, **dadurch gekennzeichnet, dass** die Messeinrichtung (22) weiter ausgewählt ist aus einer Gruppe von Messeinrichtungen, die umfasst
13.1 Messvorrichtung (22) zum Positionsmessen mittels Laufzeitmessung reflektierter Strahlung;
13.2 Messeinrichtung (22) zum Durchführen einer optischen Kohärenztomographie;
13.3 Messeinrichtung (22) zum Wechselweises Leiten eines Messstrahls (28) auf unterschiedliche Leiterendengruppen, welche zumindest ein gruppiertes Leiterende (18, 18a, 18b) aufweist;
13.4 Messeinrichtung (22) zum Vermessen von Abständen oder Strecken in wenigstens zwei Dimensionen an einer Leiterendengruppe;
13.5 Messeinrichtung (22) zum Vermessen eines Abstandes oder einer Strecke in Richtung der Erstreckung der die Leiterenden (18, 18a, 18b) aufweisenden Leiterabschnitte;
13.6 Messeinrichtung (22) zum Ermitteln eines Abstands zwischen den Leiterenden;
13.7 Messeinrichtung (22) zum Messen eines Höhenversatzes (HV) zwischen den Leiterenden (18, 18a, 18b);
13.8 Messeinrichtung (22) zum Ermitteln einer Querschnittsfläche des Endbereichs (32) der gruppierten Leiterenden (18, 18a, 18b) oder zumindest eines Leiterendes der Leiterenden (18, 18a, 18b);
13.9 Messeinrichtung (22) zum Ermitteln eines tangentialen Versatzes (TV) zwischen den Leiterenden (18, 18a, 18b);
13.10 Messeinrichtung (22) zum Ermitteln eines radialen Versatzes (RV) zwischen den Leiterenden (18, 18a, 18b);
13.11 Messeinrichtung (22) zum Messen einer Dicke, einer Breite und/oder einer Höhe des Endbereichs an der Leiterendengruppe;
13.12 eine Kombination einer oder mehrerer der Messeinrichtungen gemäß 13.1 bis 13.12.

14. Schweißvorrichtung (12) nach einem der Ansprüche 8 bis 13, **dadurch gekennzeichnet, dass** die Steuereinrichtung (24) dazu ausgebildet ist, die Schweißeinrichtung (16) zum:
14.1 Leiten eines Schweißstrahls (26) auf die gruppierten Leiterenden (18, 18a, 18b); und/oder
14.2 Leiten eines Schweißstrahls (26) entlang einer symmetrischen Kontur (36); und/oder
14.3 Leiten eines Schweißstrahls (26) entlang einer elliptischen Kontur (36); und/oder
14.4 Bilden eines Schmelzringes (38) mittels eines Schweißstrahls (26); und/oder
14.5 Bilden einer Schmelzdecke (48) mittels eines Schweißstrahls (26); und/oder
14.6 Bilden einer Schweißperle (42); und/oder
14.7 Starten des Schweißenergieeintrags auf die gruppierten Leiterenden (18, 18a, 18b); und/oder
14.8 Stoppen des Schweißenergieeintrags auf die gruppierten Leiterenden (18, 18a, 18b); und/oder
14.9 Stoppen des Schweißenergieeintrags auf die gruppierten Leiterenden (18, 18a, 18b), wenn der bestimmte Wert einen Grenzwert erreicht; und/oder
14.10 Anpassen, insbesondere Vergrößern oder Verringern, des Schweißenergieeintrags auf die gruppierten Leiterenden (18, 18a, 18b); und/oder
14.11 Einbringen eines vorbestimmten, insbesondere höheren, Schweißenergieeintrags bei einem Höhenversatz (HV) zwischen den Leiterenden (18, 18a, 18b) auf das in eine Haupterstreckungsrichtung der gruppierten Leiterenden (18, 18a, 18b) weiter oder höher erstreckende Leiterende; und/oder
14.12 Verteilen eines Schweißenergieeintrags entsprechend eines tangentialen Versatzes (TV) zwischen den Leiterenden (18, 18a, 18b); und/oder
14.13 Leiten von zwei Schweißstrahlen auf die gruppierten Leiterenden, insbesondere sequenzielles Leiten eines Schweißstrahls oder simultanes Leiten von zwei Schweißstrahlen, wobei ein Schweißstrahl einem Leiterende der gruppierten Leiterenden (18, 18a, 18b) und der zweite Schweißstrahl einem weiteren Leiterende der gruppierten Leiterenden (18, 18a, 18b) zugeordnet ist; und/oder
14.14 Erfassen eines Zeitpunktes an dem sich zwei Einzelschmelzbäder zu einem Schmelzbad vereinen, wobei das erste Schmelzbad einem ersten Leiterende (18a) und das zweite Schmelzbad dem zweiten Leiterende (18b) zugeordnet ist; und/oder
14.15 Verschweißen der Leiterenden (18, 18a, 18b), insbesondere an einem Endbereich (32) und/oder stirnseitig, in einem Parallelstoß;
anzusteuern.

15. Computerprogrammprodukt, enthaltend maschinenlesbare Steueranweisungen, die bewirken, dass die Steuerung der Vorrichtung nach einem der Ansprüche 8-14 die Verfahrensschritte nach einem der Ansprüche 1 bis 7 ausführt.

## Claims

1. Method for welding grouped conductor ends (18, 18a, 18b) of a component (14) for an electric machine by means of a welding device (12),
**characterized by** the following steps:
detecting a relative position of a first conductor end and a second conductor end of grouped conductor ends by position measurement using optical measurement methods,
a) detecting a first size parameter of a molten pool (34) formed during welding;
b) detecting a second size parameter of the molten pool (34) formed during welding;
c) determining a value of the molten pool (34) from the first size parameter and the second size parameter; and
d) controlling a welding energy input depending on the determined value of the molten pool (34).

2. Welding method according to claim 1, **characterized in that** step a) comprises at least one or more of the following steps:
a1) detecting the first size parameter by means of optical measurement methods;
a2) detecting the first size parameter by means of time-of-flight measurement of reflected radiation;
a3) performing optical coherence tomography;
a4) arranging a double cross relative to the grouped conductor ends (18, 18a, 18b), in particular relative to an end region (32) of the grouped conductor ends (18, 18a, 18b), and
arranging lines (M1, M2, M3, M4) of the double cross relative to each other, in particular at a predetermined distance from each other;
a5) forming a double cross, which is assigned in particular to an end region (32) of the grouped conductor ends (18, 18a, 18b), larger than a welding contour (36);
a6) forming a double cross in such a way that a measuring beam (28), which can be guided along the lines (M1, M2, M3, M4) of the double cross, has predetermined jump paths and/or jump times;
a7) guiding, in particular alternately guiding, a measuring beam (28) onto different conductor ends (18, 18a, 18b);
a8) guiding a measuring beam (28) onto the grouped conductor ends (18, 18a, 18b) in at least two dimensions;
a9) guiding a measuring beam (28) onto a first conductor end (18a) of the grouped conductor ends (18, 18a, 18b), in particular a first end region of the first conductor end (18a), and onto a second conductor end (18b) of the grouped conductor ends (18, 18a, 18b), in particular a second end region of the second conductor end (18b), in at least two dimensions;
a10) scanning a measuring beam (28) along a double cross which is assigned to the grouped conductor ends (18, 18a, 18b), the double cross respectively comprising two lines (M1, M2, M3, M4) which are arranged in the x- and y-directions and are arranged in particular at a predetermined distance from one another;
a11) detecting an extension, in particular lateral extension, of the molten pool (34) as a first size parameter, in particular in a plane of the grouped conductor ends (18, 18a, 18b);
a12) detecting at least one input parameter, wherein as the at least one input parameter a cross-sectional area of an end region (32) of the grouped conductor ends (18, 18a, 18b) or at least one conductor end (18, 18a, 18b) and/or a distance (s) between the conductor ends (18, 18a, 18b), in particular prior to welding, and/or a height offset (HV) between the conductor ends (18, 18a, 18b) and/or a tangential offset (TV) and/or a radial offset (RV) is detected, the at least one input parameter, in particular, being detected for determining the value.

3. Welding method according to any of the preceding claims, **characterized in that** step b) comprises at least one or more of the following steps:
b1) detecting the second size parameter by means of optical measurement methods;
b2) detecting the second size parameter by means of time-of-flight measurement of reflected radiation;
b3) performing optical coherence tomography;
b4) detecting the second size parameter at a position of a welding beam (26);
b5) guiding or directing a measuring beam (28) to a position, in particular a current position, of a welding beam (26);
b6) detecting a depth of a hole or a vapor capillary or a vapor channel, in particular a keyhole (44), at a position of a welding beam (26);
b7) detecting a depth of a hole or a vapor capillary or a vapor channel, in particular a keyhole (44), at a position of a welding beam (26) in a main extension direction of the grouped conductor ends (18, 18a, 18b);
b8) detecting a depth of a hole or a vapor capillary or a vapor channel, in particular a keyhole (44), in a beam direction of a welding beam (26);
b9) detecting a gap depth during gap crossing of a measuring beam (28) and/or welding beam (26);
b10) detecting of a molten pool depth;
b11) detecting a molten pool depth on a surface of at least one conductor end (18, 18a, 18b) or of the grouped conductor ends (18, 18a, 18b), in particular at an end region (32) of the grouped conductor ends (18, 18a, 18b);
b12) detecting a weld depth at a position of a welding beam (26);
b13) correlating a detected depth at a position of a welding beam (26) with height information in a main extension direction of the grouped conductor ends (18, 18a, 18b);
b14) detecting at least one input parameter, wherein as the at least one input parameter a cross-sectional area of an end region (32) of the grouped conductor ends (18, 18a, 18b) or of at least one conductor end (18, 18a, 18b) and/or a distance (s) between the conductor ends (18, 18a, 18b), in particular prior to welding, and/or a height offset (HV) between the conductor ends (18, 18a, 18b) and/or a tangential offset (TV) and/or a radial offset (RV) is detected, the at least one input parameter, in particular, being detected for determining the value.

4. Welding method according to any of the preceding claims, **characterized in that** step c) comprises at least one or more of the following steps:
c1) determining a molten pool dimension of the molten pool (34) as a value of the molten pool;
c2) determining an increase in a melt volume as a value of the molten pool (34);
c3) determining a connection cross-section of the grouped conductor ends (18, 18a, 18b) as a value of the molten pool (34).

5. Welding method according to any of the preceding claims, **characterized in that** step d) comprises at least one or more of the following steps:
d1) guiding a welding beam (26) onto the grouped conductor ends (18, 18a, 18b);
d2) guiding a welding beam (26), in particular repeatedly, along a symmetrical contour (36);
d3) guiding a welding beam (26), in particular repeatedly, along an elliptical contour (36);
d4) forming a fusion ring (38) by means of a welding beam (26);
d5) forming a fusion blanket (40) or a molten pool (34) by means of a welding beam (26);
d6) forming a weld bead (48);
d7) starting the welding energy input to the grouped conductor ends (18, 18a, 18b);
d8) stopping the welding energy input to the grouped conductor ends (18, 18a, 18b);
d9) stopping the welding energy input to the grouped conductor ends (18, 18a, 18b) when the determined value reaches a limit value;
d10) adjusting, in particular increasing or decreasing, the welding energy input to the grouped conductor ends (18, 18a, 18b);
d11) applying a predetermined welding energy input, in particular a higher welding energy input, to the conductor end (18, 18a, 18b) extending further or higher in a main extension direction of the grouped conductor ends (18, 18a, 18b), in the case of a height offset (HV) between the conductor ends (18, 18a, 18b);
d12) distributing a welding energy input according to a tangential offset (TV) between the conductor ends (18, 18a, 18b);
d13) guiding two welding beams, in particular sequential directing of one welding beam (26) or simultaneous guiding of two welding beams, onto the grouped conductor ends (18, 18a, 18b), wherein one welding beam (26) is assigned to one conductor end (18a, 18b) of the grouped conductor ends (18, 18a, 18b) and the second welding beam (26) is assigned to another conductor end (18a, 18b) of the grouped conductor ends (18, 18a, 18b);
d14) detecting a point in time at which two individual molten pools combine into one molten pool (34), the first molten pool being assigned to a first conductor end (18a) and the second molten pool being assigned to the second conductor end (18b);
d15) welding the conductor ends (18, 18a, 18b), in particular at an end region (32) and/or at the end face, in a parallel joint.

6. Welding method according to any of the preceding claims, **characterized in that** the detection of the relative position further comprises at least one or more of the following steps:
6.1 position measuring by means of time-of-flight measurement of reflected radiation;
6.2 performing an optical coherence tomography;
6.3 alternately guiding a measuring beam (28) onto different conductor end groups having at least one grouped conductor end (18, 18a, 18b);
6.4 measuring intervals or distances in at least two dimensions at a conductor end group;
6.5 measuring an interval or distance in the direction of the extension of the conductor sections comprising the conductor ends (18, 18a, 18b);
6.6 determining a distance (s) between the conductor ends (18, 18a, 18b);
6.7 measuring a height offset (HV) between the conductor ends (18, 18a, 18b);
6.8 determining a cross-sectional area of an end region (32) of the grouped conductor ends (18, 18a, 18b) or of at least one conductor end of the conductor ends (18, 18a, 18b);
6.9 determining a tangential offset (TV) between the conductor ends (18, 18a, 18b);
6.10 determining a radial offset (RV) between the conductor ends (18, 18a, 18b);
6.11 measuring a thickness, a width and/or a height of an end region (32) at the conductor end group;
6.12 detecting at least one input parameter, wherein as the at least one input parameter a cross-sectional area of an end region (32) of the grouped conductor ends (18, 18a, 18b) or of at least one conductor end (18, 18a, 18b) and/or a distance (s) between the conductor ends (18, 18a, 18b), in particular prior to welding, and/or a height offset (HV) between the conductor ends (18, 18a, 18b) and/or a tangential offset (TV) and/or a radial offset (RV) is detected, the at least one input parameter, in particular, being detected for determining the value.

7. Welding method according to any of the preceding claims, **characterized in that**
7.1 the first size parameter, the second size parameter, an extension of the molten pool (34), a depth of a vapor channel or a vapor capillary at the position of the welding beam (26), at least one gap dimension and/or the value are correlated to corresponding sizes and/or data sets from preliminary experiments and/or
7.2 a training data set for neural networks is formed, the training data set comprising the first size parameter, the second size parameter, an extension of the molten pool (34), a depth of a steam channel or a steam capillary at the position of the welding beam (26), at least one gap dimension, the value and/or data sets from previous experiments.

8. Welding device (12) for welding grouped conductor ends (18, 18a, 18b) of a component (14) for an electrical machine, comprising:
a welding means (16) for welding energy input to grouped conductor ends (18, 18a, 18b); **characterized by**:
a measuring device (22) for detecting a relative position of a first conductor end and a second conductor end of grouped conductor ends by position measurement using optical measurement methods, wherein
the measuring device (22) is further adapted to detect a first size parameter of a molten pool (34) formed during welding and a second size parameter of the molten pool (34) formed during welding, wherein
the measuring device (22) is further adapted to determine a value of the molten pool (34) from the first size parameter and the second size parameter, and
a control means (24) adapted to perform the steps of the method according to claim 1 in order to control a welding energy input to the conductor ends (18, 18a, 18b) to be welded depending on the determined value.

9. Welding device (12) according to claim 8, **characterized in that** the measuring device (22) is
9.1 designed for evaluating the welding result; and/or
9.2 comprises a comparing means for comparing the value with a predetermined limit value.

10. Welding device (12) according to claim 8 or 9, **characterized in that** the measuring device (22) is selected from a group of measuring devices comprising:
10.1 measuring device (22) for detecting the first size parameter using optical measuring methods;
10.2 measuring device (22) for detecting the first size parameter by means of time-of-flight measurement of reflected radiation;
10.3 measuring device (22) for performing optical coherence tomography;
10.4 measuring device (22) for arranging a double cross relative to the grouped conductor ends (18, 18a, 18b), in particular an end region (32) of the grouped conductor ends (18, 18a, 18b), and arranging lines (M1, M2, M3, M4) of the double cross relative to each other, in particular at a predetermined distance;
10.5 measuring device (22) for forming a double cross, which is assigned in particular to an end region (32) of the grouped conductor ends (18, 18a, 18b), larger than a welding contour (36);
10.6 measuring device (22) for forming a double cross in such a way that a measuring beam (28), which can be guided along the lines (M1, M2, M3, M4) of the double cross, has predetermined jump times and/or jump paths;
10.7 measuring device (22) for guiding, in particular alternately guiding, a measuring beam (28) onto different conductor ends (18, 18a, 18b);
10.8 measuring device (22) for directing a measuring beam (28) onto the grouped conductor ends (18, 18a, 18b) in at least two dimensions;
10.9 measuring device (22) for directing a measuring beam (28) to a first conductor end (18a) of the grouped conductor ends (18, 18a, 18b), in particular a first end region of the first conductor end (18a), and to a second conductor end (18b) of the grouped conductor ends (18, 18a, 18b), in particular a second end region of the second conductor end (18b), in at least two dimensions;
10.10 measuring device (22) for tracing a measuring beam (28) along a double cross that is assigned to the grouped conductor ends (18, 18a, 18b), the double cross respectively comprising two lines (M1, M2, M3, M4) which are arranged in the x- and y-directions and are arranged in particular at a predetermined distance from one another;
10.11 measuring device (22) for detecting an extension of the molten pool, in particular a lateral extension, as a first size parameter, in particular in a plane of the grouped conductor ends (18, 18a, 18b);
10.12 measuring device (22) for detecting at least one input parameter, wherein a cross-sectional area of an end region of the group of conductor ends or at least one conductor end and/or a distance between the conductor ends, in particular prior to welding, and/or a height offset (HV) between the conductor ends and/or a tangential offset (TV) and/or a radial offset (RV) is detected as the at least one input parameter;
10.13 a combination of one or more of the measuring device according to 10.1 to 10.12.

11. Welding device according to any one of claims 8 to 10, **characterized in that** the measuring device (22) is selected from a group of measuring devices comprising:
11.1 measuring device (22) for detecting the second size parameter using optical measuring methods;
11.2 measuring device (22) for detecting the second size parameter by means of time-of-flight measurement of reflected radiation;
11.3 measuring device (22) for performing optical coherence tomography;
11.4 measuring device (22) for guiding a measuring beam (28) to a position of a welding beam (26);
11.5 measuring device (22) for detecting the second size parameter at a position of a welding beam (26);
11.6 measuring device (22) for detecting a depth of a hole or a vapor capillary or a vapor channel, in particular a keyhole (44), at a position of a welding beam (26);
11.7 measuring device (22) for detecting a depth of a hole or a vapor capillary or a vapor channel, in particular a keyhole (44), at a position of a welding beam (26) in a main extension direction of the grouped conductor ends (18, 18a, 18b);
11.8 measuring device (22) for detecting a gap depth during gap crossing of a measuring beam (28) and/or a welding beam (26);
11.9 measuring device (22) for detecting a molten pool depth;
11.10 measuring device (22) for detecting a molten pool depth on a surface of at least one conductor end or of the grouped conductor ends (18, 18a, 18b);
11.11 measuring device (22) for detecting at least one input parameter, wherein as the at least one input parameter a cross-sectional area of an end region (32) of the grouped conductor ends (18, 18a, 18b) or of at least one conductor end (18, 18a, 18b) and/or a distance (s) between the conductor ends (18, 18a, 18b), in particular prior to welding, and/or a height offset (HV) between the conductor ends (18, 18a, 18b) and/or a tangential offset (TV) and/or a radial offset (RV) is detected, wherein the at least one input parameter for determining the value is detected;
11.12 a combination of one or more of the measuring devices according to 11.1 to 11.11.

12. Welding device (12) according to any one of claims 8 to 11, **characterized in that** the measuring device (22) is selected from a group of measuring devices comprising:
12.1 a measuring device (22) for determining a molten pool dimension of the molten pool (34) as a value of the molten pool (34);
12.2 a measuring device (22) for determining an increase in a melt volume as a value of the molten pool (34);
12.3 a measuring device (22) for determining a connection cross-section of the grouped conductor ends (18, 18a, 18b) as a value of the molten pool (34);
12.4 a combination of one or more of the measuring devices according to 12.1 to 12.3.

13. Welding device according to any one of claims 8 to 12, **characterized in that** the measuring device (22) is selected from a group of measuring devices comprising:
13.1 measuring device (22) for position measurement by means of time-of-flight measurement of reflected radiation;
13.2 measuring device (22) for performing optical coherence tomography;
13.3 measuring device (22) for alternately directing a measuring beam (28) onto different conductor end groups having at least one grouped conductor end (18, 18a, 18b);
13.4 measuring device (22) for measuring intervals or distances in at least two dimensions at a conductor end group;
13.5 measuring device (22) for measuring an interval or a distance in the direction of the extension of the conductor sections comprising the conductor ends (18, 18a, 18b);
13.6 measuring device (22) for determining a distance between the conductor ends;
13.7 measuring device (22) for measuring a height offset (HV) between the conductor ends (18, 18a, 18b);
13.8 measuring device (22) for determining a cross-sectional area of the end region (32) of the grouped conductor ends (18, 18a, 18b) or of at least one conductor end of the conductor ends (18, 18a, 18b);
13.9 measuring device (22) for determining a tangential offset (TV) between the conductor ends (18, 18a, 18b);
13.10 measuring device (22) for determining a radial offset (RV) between the conductor ends (18, 18a, 18b);
13.11 measuring device (22) for measuring a thickness, a width and/or a height of the end region at the conductor end group;
13.12 a combination of one or more of the measuring devices according to 13.1 to 13.12.

14. Welding device (12) according to any one of claims 8 to 13, **characterized in that** the control means (24) is adapted to control the welding means (16) for:
14.1 directing a welding beam (26) onto the grouped conductor ends (18, 18a, 18b); and/or
14.2 guiding a welding beam (26) along a symmetrical contour (36); and/or
14.3 guiding a welding beam (26) along an elliptical contour (36); and/or
14.4 forming a fusion ring (38) by means of a welding beam (26); and/or
14.5 forming a fusion blanket (48) by means of a welding beam (26); and/or
14.6 forming a weld bead (42); and/or
14.7 starting the welding energy input to the grouped conductor ends (18, 18a, 18b); and/or
14.8 stopping the welding energy input to the grouped conductor ends (18, 18a, 18b); and/or
14.9 stopping the welding energy input to the grouped conductor ends (18, 18a, 18b) when the determined value reaches a limit value; and/or
14.10 adjusting, in particular increasing or decreasing, the welding energy input to the grouped conductor ends (18, 18a, 18b); and/or
14.11 applying a predetermined welding energy input, in particular higher welding energy input, to the conductor end extending further or higher in a main extension direction of the grouped conductor ends (18, 18a, 18b) in the case of a height offset (HV) between the conductor ends (18, 18a, 18b); and/or
14.12 distributing a welding energy input according to a tangential offset (TV) between the conductor ends (18, 18a, 18b); and/or
14.13 guiding two welding beams onto the grouped conductor ends, in particular sequential guiding of one welding beam or simultaneous guiding of two welding beams, wherein one welding beam is assigned to one conductor end of the grouped conductor ends (18, 18a, 18b) and the second welding beam is assigned to another conductor end of the grouped conductor ends (18, 18a, 18b); and/or
14.14 detecting a point in time at which two individual molten pools combine into one molten pool, the first molten pool being assigned to a first conductor end (18a) and the second molten pool being assigned to the second conductor end (18b); and/or
14.15 welding the conductor ends (18, 18a, 18b), in particular at an end region (32) and/or at the end face, in a parallel joint.

15. Computer program product including machine-readable control instructions which, when loaded into a controller of a welding device (12) according to any one of claims 8 to 14, cause the welding device (12) to perform the welding process according to any one of claims 1 to 7.

## Revendications

1. Procédé de soudure d'extrémités de conducteurs groupés (18, 18a, 18b) d'un composant (14) pour une machine électrique au moyen d'un dispositif de soudure (12), **caractérisé par** les étapes suivantes:
détecter d'une position relative d'une première extrémité de conducteur et d'une deuxième extrémité de conducteur des extrémités de conducteur groupées par mesure de la position à l'aide de méthodes de mesure optiques,
a) détecter un premier paramètre de taille d'un bain de fusion (34) formé pendant le soudure;
b) détecter un second paramètre de taille du bain de fusion (34) formé pendant le soudure;
c) déterminer une valeur du bain de fusion (34) à partir du premier paramètre de taille et du second paramètre de taille; et
d) contrôler l'apport d'énergie de soudure en fonction de la valeur déterminée du bain de fusion (34).

2. Procédé de soudure selon la revendication 1, **caractérisé en ce que** l'étape a) comprend au moins une ou plusieurs des étapes suivantes:
a1) détecter le premier paramètre de taille au moyen de méthodes de mesure optiques;
a2) détecter le premier paramètre de taille au moyen d'une mesure du temps de vol du rayonnement réfléchi;
a3) effectuer une tomographie par cohérence optique;
a4) disposer une double croix par rapport aux extrémités de conducteur groupés (18, 18a, 18b), en particulier par rapport à une zone d'extrémité (32) des extrémités de conducteur groupés (18, 18a, 18b), et disposer les lignes (M1, M2, M3, M4) de la double croix l'une par rapport à l'autre, en particulier à une distance prédéterminée l'une par rapport à l'autre;
a5) former une double croix, qui est affectée en particulier à une zone d'extrémité (32) des extrémités de conducteur groupées (18, 18a, 18b), plus grande qu'un contour de soudure (36);
a6) former une double croix de telle sorte qu'un faisceau de mesure (28), qui peut être guidé le long des lignes (M1, M2, M3, M4) de la double croix, présente des trajectoires de saut et/ou des temps de saut prédéterminés;
a7) guider, en particulier en alternance, un faisceau de mesure (28) sur différentes extrémités de conducteurs (18, 18a, 18b);
a8) guider un faisceau de mesure (28) sur les extrémités de conducteur groupées (18, 18a, 18b) dans au moins deux dimensions;
a9) guider un faisceau de mesure (28) sur une première extrémité de conducteur (18a) des extrémités de conducteur groupées (18, 18a, 18b), en particulier une première zone d'extrémité de la première extrémité de conducteur (18a), et sur une deuxième extrémité de conducteur (18b) des extrémités de conducteur groupées (18, 18a, 18b), en particulier une deuxième zone d'extrémité de la deuxième extrémité de conducteur (18b), dans au moins deux dimensions;
a10) balayer un faisceau de mesure (28) le long d'une double croix affectée aux extrémités de conducteurs groupées (18, 18a, 18b), la double croix comprenant respectivement deux lignes (M1, M2, M3, M4) disposées dans les directions x et y et disposées en particulier à une distance prédéterminée l'une de l'autre;
a11) détecter une extension, en particulier latérale, du bain de fusion (34) en tant que premier paramètre de taille, en particulier dans un plan des extrémités de conducteur groupées (18, 18a, 18b);
a12) détecter au moins un paramètre d'entrée, dans lequel, en tant que ledit au moins un paramètre d'entrée, une surface de section transversale d'une zone d'extrémité (32) des extrémités de conducteur groupées (18, 18a, 18b) ou au moins une extrémité de conducteur (18, 18a, 18b) et/ou une distance (s) entre les extrémités de conducteur (18, 18a, 18b), notamment avant le soudure, et/ou un décalage en hauteur (HV) entre les extrémités de conducteur (18, 18a, 18b) et/ou un décalage tangentiel (TV) et/ou un décalage radial (RV) est détecté, ledit au moins un paramètre d'entrée étant notamment détecté pour déterminer la valeur.

3. Procédé de soudure selon l'une quelconque des revendications précédentes, **caractérisé en ce que** l'étape b) comprend au moins une ou plusieurs des étapes suivantes:
b1) détecter le deuxième paramètre de taille au moyen de méthodes de mesure optique;
b2) détecter le deuxième paramètre de taille au moyen d'une mesure du temps de vol du rayonnement réfléchi;
b3) effectuer une tomographie par cohérence optique;
b4) détecter le deuxième paramètre de taille à une position d'un faisceau de soudure (26);
b5) guider ou diriger un faisceau de mesure (28) vers une position, en particulier une position actuelle, d'un faisceau de soudure (26);
b6) détecter la profondeur d'un trou ou d'un capillaire de vapeur ou d'un canal de vapeur, en particulier d'un trou de serrure (44), à la position d'un faisceau de soudure (26);
b7) détecter la profondeur d'un trou ou d'un capillaire de vapeur ou d'un canal de vapeur, en particulier d'un trou de serrure (44), à l'emplacement d'un faisceau de soudure (26) dans une direction d'extension principale des extrémités de conducteur groupées (18, 18a, 18b);
b8) détecter la profondeur d'un trou ou d'un capillaire de vapeur ou d'un canal de vapeur, en particulier d'un trou de serrure (44), dans la direction du faisceau de soudure (26);
b9) détecter la profondeur d'une fente pendant la traversée d'une fente par un faisceau de mesure (28) et/ou un faisceau de soudure (26);
b10) détecter la profondeur d'un bain de fusion;
b11) détecter une profondeur de bain de fusion sur une surface d'au moins une extrémité de conducteur (18, 18a, 18b) ou des extrémités de conducteur groupées (18, 18a, 18b), en particulier dans une zone d'extrémité (32) des extrémités de conducteur groupées (18, 18a, 18b);
b12) détecter une profondeur de soudure à une position d'un faisceau de soudure (26);
b13) corréler une profondeur détectée à une position d'un faisceau de soudure (26) avec des informations de hauteur dans une direction d'extension principale des extrémités de conducteur groupées (18, 18a, 18b);
b14) détecter au moins un paramètre d'entrée, dans lequel, en tant que ledit au moins un paramètre d'entrée, une surface de section transversale d'une zone d'extrémité (32) des extrémités de conducteur groupées (18, 18a, 18b) ou au moins une extrémité de conducteur (18, 18a, 18b) et/ou une distance (s) entre les extrémités de conducteur (18, 18a, 18b), notamment avant le soudure, et/ou un décalage en hauteur (HV) entre les extrémités de conducteur (18, 18a, 18b) et/ou un décalage tangentiel (TV) et/ou un décalage radial (RV) est détecté, ledit au moins un paramètre d'entrée étant notamment détecté pour déterminer la valeur.

4. Procédé de soudure selon l'une quelconque des revendications précédentes, **caractérisé en ce que** l'étape c) comprend au moins une ou plusieurs des étapes suivantes:
c1) déterminer une dimension du bain de fusion (34) en tant que valeur du bain de fusion;
c2) déterminer une augmentation du volume de fusion en tant que valeur du bain de fusion (34);
c3) déterminer une section de connexion des extrémités de conducteurs groupées (18, 18a, 18b) en tant que valeur du bain de fusion (34).

5. Procédé de soudure selon l'une quelconque des revendications précédentes, **caractérisé en ce que** l'étape d) comprend au moins une ou plusieurs des étapes suivantes:
d1) guider un faisceau de soudure (26) sur les extrémités de conducteur groupées (18, 18a, 18b) ;
d2) guider un faisceau de soudure (26), en particulier de manière répétée, le long d'un contour symétrique (36);
d3) guider un faisceau de soudure (26), en particulier de manière répétée, le long d'un contour elliptique (36);
d4) former un anneau de fusion (38) au moyen d'un faisceau de soudure (26);
d5) former une nappe de fusion (40) ou un bain de fusion (34) au moyen d'un faisceau de soudure (26);
d6) former une perle de soudure (48);
d7) commencer l'apport d'énergie de soudure aux extrémités de conducteurs groupées (18, 18a, 18b);
d8) arrêt de l'apport d'énergie de soudure aux extrémités de conducteurs groupées (18, 18a, 18b);
d9) arrêter l'apport d'énergie de soudure aux extrémités de conducteurs groupées (18, 18a, 18b) lorsque la valeur déterminée atteint une valeur limite;
d10) ajuster, en particulier augmenter ou diminuer, l'apport d'énergie de soudure aux extrémités de conducteurs groupées (18, 18a, 18b);
d11) appliquer un apport d'énergie de soudure prédéterminé, en particulier un apport d'énergie de soudure plus élevé, à l'extrémité de conducteur (18, 18a, 18b) qui s'étend plus loin ou plus haut dans une direction d'extension principale des extrémités de conducteur groupées (18, 18a, 18b), dans le cas d'un décalage en hauteur (HV) entre les extrémités de conducteur (18, 18a, 18b);
d12) distribuer un apport d'énergie de soudure en fonction d'un décalage tangentiel (TV) entre les extrémités de conducteurs (18, 18a, 18b);
d13) guider deux faisceaux de soudure, en particulier guider séquentiellement un faisceau de soudure (26) ou guider simultanément deux faisceaux de soudure, sur les extrémités de conducteur groupées (18, 18a, 18b), un faisceau de soudure (26) étant affecté à une extrémité de conducteur (18a, 18b) des extrémités de conducteur groupées (18, 18a, 18b) et le second faisceau de soudure (26) étant affecté à une autre extrémité de conducteur (18a, 18b) des extrémités de conducteur groupées (18, 18a, 18b);
d14) détecter un moment où deux bains de fusion individuels se combinent en un seul bain de fusion (34), le premier bain de fusion étant affecté à une première extrémité de conducteur (18a) et le second bain de fusion étant affecté à la seconde extrémité de conducteur (18b);
d15) souder les extrémités du conducteur (18, 18a, 18b), en particulier au niveau d'une zone d'extrémité (32) et/ou de la face d'extrémité, en un joint parallèle.

6. Procédé de soudure selon l'une quelconque des revendications précédentes, **caractérisé en ce que** la détection de la position relative comprend en outre au moins une ou plusieurs des étapes suivantes:
6.1 mesurer la position au moyen d'une mesure du temps de vol d'un rayonnement réfléchi;
6.2 effectuer une tomographie par cohérence optique;
6.3 guider alternativement un faisceau de mesure (28) sur différents groupes d'extrémités de conducteur ayant au moins une extrémité de conducteur groupée (18, 18a, 18b);
6.4 mesurer des intervalles ou des distances dans au moins deux dimensions au niveau d'un groupe d'extrémités de conducteur;
6.5 mesurer un intervalle ou une distance dans la direction de l'extension des sections de conducteurs comprenant les extrémités de conducteur (18, 18a, 18b);
6.6 déterminer une distance (s) entre les extrémités de conducteur (18, 18a, 18b);
6.7 mesurer un décalage en hauteur (HV) entre les extrémités de conducteur (18, 18a, 18b);
6.8 déterminer une surface de section transversale d'une zone d'extrémité (32) des extrémités de conducteur groupées (18, 18a, 18b) ou d'au moins une extrémité de conducteur des extrémités de conducteur (18, 18a, 18b);
6.9 déterminer un décalage tangentiel (TV) entre les extrémités de conducteur (18, 18a, 18b);
6.10 déterminer un décalage radial (RV) entre les extrémités de conducteur (18, 18a, 18b);
6.11 mesurer l'épaisseur, la largeur et/ou la hauteur d'une zone d'extrémité (32) au niveau du groupe d'extrémités de conducteur;
6. 12 détecter au moins un paramètre d'entrée, dans lequel, en tant que ledit au moins un paramètre d'entrée, une surface de section transversale d'une zone d'extrémité (32) des extrémités de conducteur groupées (18, 18a, 18b) ou au moins une extrémité de conducteur (18, 18a, 18b) et/ou une distance (s) entre les extrémités de conducteur (18, 18a, 18b), notamment avant le soudure, et/ou un décalage en hauteur (HV) entre les extrémités de conducteur (18, 18a, 18b) et/ou un décalage tangentiel (TV) et/ou un décalage radial (RV) est détecté, ledit au moins un paramètre d'entrée étant détecté pour déterminer la valeur.

7. Procédé de soudure selon l'une quelconque des revendications précédentes, **caractérisé en ce que**
7.1 le premier paramètre de taille, le second paramètre de taille, une extension du bain de fusion (34), une profondeur d'un canal de vapeur ou d'un capillaire de vapeur à la position du faisceau de soudure (26), au moins une mesure de fente et/ou la valeur sont corrélés à des tailles correspondantes et/ou à des ensembles de données provenant d'expériences préliminaires et/ou
7.2 un ensemble de données d'entraînement pour les réseaux neuronaux est formé, l'ensemble de données d'entraînement comprenant le premier paramètre de taille, le deuxième paramètre de taille, une extension du bain de fusion (34), une profondeur d'un canal de vapeur ou d'un capillaire de vapeur à la position du faisceau de soudure (26), au moins une mesure de fente, la valeur et/ou des ensembles de données provenant d'expériences antérieures.

8. Dispositif de soudure (12) pour le soudure d'extrémités de conducteurs groupés (18, 18a, 18b) d'un composant (14) pour une machine électrique, comprenant:
un moyen de soudure (16) pour l'apport d'énergie de soudure aux extrémités de conducteur groupées (18, 18a, 18b);
**caractérisé par**:
un dispositif de mesure (22) pour détecter une position relative d'une première extrémité de conducteur et d'une deuxième extrémité de conducteur des extrémités de conducteur groupées par mesure de position à l'aide de méthodes de mesure optiques, dans lequel le dispositif de mesure (22) est en outre adapté pour détecter un premier paramètre de taille d'un bain de fusion (34) formé pendant le soudure et un deuxième paramètre de taille du bain de fusion (34) formé pendant le soudure, dans lequel
le dispositif de mesure (22) est en outre adapté pour déterminer une valeur du bain de fusion (34) à partir du premier paramètre de taille et du second paramètre de taille, et
un moyen de commande (24) adapté pour exécuter les étapes du procédé selon la revendication 1 afin de contrôler un apport d'énergie de soudure aux extrémités du conducteur (18, 18a, 18b) à souder en fonction de la valeur déterminée.

9. Dispositif de soudure (12) selon la revendication 8, **caractérisé en ce que** le dispositif de mesure (22) est
9.1 conçu pour évaluer le résultat du soudure; et/ou
9.2 comprend un moyen de comparaison pour comparer la valeur avec une valeur limite prédéterminée.

10. Dispositif de soudure (12) selon la revendication 8 ou 9, **caractérisé en ce que** le dispositif de mesure (22) est choisi dans un groupe de dispositifs de mesure comprenant:
10.1 un dispositif de mesure (22) pour détecter le premier paramètre de taille à l'aide de méthodes de mesure optiques;
10.2 un dispositif de mesure (22) pour détecter le premier paramètre de taille au moyen d'une mesure du temps de vol d'un rayonnement réfléchi;
10.3 un dispositif de mesure (22) pour effectuer une tomographie par cohérence optique;
10.4 un dispositif de mesure (22) pour disposer une double croix par rapport aux extrémités de conducteur groupées (18, 18a, 18b), en particulier une zone d'extrémité (32) des extrémités de conducteur groupées (18, 18a, 18b), et pour disposer les lignes (M1, M2, M3, M4) de la double croix les unes par rapport aux autres, en particulier à une distance prédéterminée;
10.5 un dispositif de mesure (22) pour former une double croix, qui est affectée en particulier à une zone d'extrémité (32) des extrémités de conducteur groupées (18, 18a, 18b), plus grande qu'un contour de soudure (36);
10.6 un dispositif de mesure (22) pour former une double croix de telle sorte qu'un faisceau de mesure (28), qui peut être guidé le long des lignes (M1, M2, M3, M4) de la double croix, présente des temps de saut et/ou des trajectoires de saut prédéterminés;
10.7 un dispositif de mesure (22) pour guider, en particulier en alternance, un faisceau de mesure (28) sur différentes extrémités de conducteurs (18, 18a, 18b);
10.8 un dispositif de mesure (22) pour diriger un faisceau de mesure (28) sur les extrémités de conducteur groupées (18, 18a, 18b) dans au moins deux dimensions;
10.9 un dispositif de mesure (22) pour diriger un faisceau de mesure (28) sur une première extrémité de conducteur (18a) des extrémités de conducteur groupées (18, 18a, 18b), en particulier une première zone d'extrémité de la première extrémité de conducteur (18a), et sur une deuxième extrémité de conducteur (18b) des extrémités de conducteur groupées (18, 18a, 18b), en particulier une deuxième zone d'extrémité de la deuxième extrémité de conducteur (18b), dans au moins deux dimensions;
10.10 un dispositif de mesure (22) pour balayer un faisceau de mesure (28) le long d'une double croix affectée aux extrémités de conducteurs groupées (18, 18a, 18b), la double croix comprenant respectivement deux lignes (M1, M2, M3, M4) disposées dans les directions x et y et disposées en particulier à une distance prédéterminée l'une de l'autre;
10.11 un dispositif de mesure (22) pour détecter une extension du bain de fusion, en particulier une extension latérale, en tant que premier paramètre de taille, en particulier dans un plan des extrémités de conducteur groupées (18, 18a, 18b);
10.12 un dispositif de mesure (22) pour détecter au moins un paramètre d'entrée, dans lequel, en tant que ledit au moins un paramètre d'entrée, une surface de section transversale d'une zone d'extrémité des extrémités de conducteur groupées ou au moins une extrémité de conducteur et/ou une distance entre les extrémités de conducteur, notamment avant le soudure, et/ou un décalage en hauteur (HV) entre les extrémités de conducteur et/ou un décalage tangentiel (TV) et/ou un décalage radial (RV) est détecté;
10.13 une combinaison d'un ou de plusieurs dispositifs de mesure selon les points 10.1 à 10.12.

11. Dispositif de soudure selon l'une quelconque des revendications 8 à 10, **caractérisé en ce que** le dispositif de mesure (22) est choisi dans un groupe de dispositifs de mesure comprenant:
11.1 un dispositif de mesure (22) pour détecter le deuxième paramètre de taille à l'aide de méthodes de mesure optiques;
11.2 un dispositif de mesure (22) pour détecter le second paramètre de taille au moyen d'une mesure du temps de vol d'un rayonnement réfléchi;
11.3 un dispositif de mesure (22) pour effectuer une tomographie par cohérence optique;
11.4 un dispositif de mesure (22) pour guider un faisceau de mesure (28) vers une position d'un faisceau de soudure (26);
11.5 un dispositif de mesure (22) pour détecter le deuxième paramètre de taille à une position d'un faisceau de soudure (26);
11.6 un dispositif de mesure (22) pour détecter la profondeur d'un trou ou d'un capillaire de vapeur ou d'un canal de vapeur, en particulier d'un trou de serrure (44), à un position d'un faisceau de soudure (26);
11.7 un dispositif de mesure (22) pour détecter la profondeur d'un trou ou d'un capillaire de vapeur ou d'un canal de vapeur, en particulier d'un trou de serrure (44), à un position d'un faisceau de soudure (26) dans une direction d'extension principale des extrémités de conducteur groupées (18, 18a, 18b);
11.8 un dispositif de mesure (22) pour détecter la profondeur d'une fente pendant la traversée d'une fente par un faisceau de mesure (28) et/ou un faisceau de soudure (26);
11.9 un dispositif de mesure (22) pour détecter la profondeur d'un bain de fusion;
11.10 un dispositif de mesure (22) pour détecter la profondeur d'un bain de fusion sur une surface d'au moins une extrémité de conducteur ou des extrémités de conducteur groupées (18, 18a, 18b);
11.11 un dispositif de mesure (22) pour détecter au moins un paramètre d'entrée, dans lequel, en tant que ledit au moins un paramètre d'entrée, une surface de section transversale d'une zone d'extrémité (32) des extrémités de conducteur groupées (18, 18a, 18b) ou au moins une extrémité de conducteur (18, 18a, 18b) et/ou une distance (s) entre les extrémités de conducteur (18, 18a, 18b), notamment avant le soudure, et/ou un décalage en hauteur (HV) entre les extrémités de conducteur (18, 18a, 18b) et/ou un décalage tangentiel (TV) et/ou un décalage radial (RV) est détecté, ledit au moins un paramètre d'entrée étant détecté pour déterminer la valeur;
11.12 une combinaison d'un ou de plusieurs des dispositifs de mesure selon les points 11.1 à 11.11.

12. Dispositif de soudure (12) selon l'une quelconque des revendications 8 à 11, **caractérisé en ce que** le dispositif de mesure (22) est choisi dans un groupe de dispositifs de mesure comprenant:
12.1 un dispositif de mesure (22) pour déterminer une dimension de bain de fusion du bain de fusion (34) en tant que valeur du bain de fusion (34);
12.2 un dispositif de mesure (22) pour déterminer une augmentation du volume de fusion en tant que valeur du bain de fusion (34);
12.3 un dispositif de mesure (22) pour déterminer une section de connexion des extrémités de conducteurs groupées (18, 18a, 18b) en tant que valeur du bain de fusion (34);
12.4 une combinaison d'un ou plusieurs des dispositifs de mesure selon les points 12.1 à 12.3.

13. Dispositif de soudure selon l'une quelconque des revendications 8 à 12, **caractérisé en ce que** le dispositif de mesure (22) est choisi dans un groupe de dispositifs de mesure comprenant:
13.1 un dispositif de mesure (22) pour la mesure de la position au moyen d'une mesure du temps de vol du rayonnement réfléchi;
13.2 un dispositif de mesure (22) pour la réalisation d'une tomographie par cohérence optique;
13.3 un dispositif de mesure (22) pour diriger alternativement un faisceau de mesure (28) sur différents groupes d'extrémité de conducteur ayant au moins une extrémité de conducteur groupée (18, 18a, 18b);
13.4 un dispositif de mesure (22) pour mesurer des intervalles ou des distances dans au moins deux dimensions sur un groupe d'extrémités de conducteur;
13.5 un dispositif de mesure (22) pour mesurer un intervalle ou une distance dans la direction de l'extension des sections de conducteur comprenant les extrémités de conducteur (18, 18a, 18b);
13.6 un dispositif de mesure (22) pour déterminer une distance entre les extrémités de conducteur;
13.7 un dispositif de mesure (22) pour mesurer un décalage en hauteur (HV) entre les extrémités de conducteur (18, 18a, 18b);
13.8 un dispositif de mesure (22) pour déterminer une surface de section transversale de la zone d'extrémité (32) des extrémités de conducteur groupées (18, 18a, 18b) ou d'au moins une extrémité de conducteur des extrémités de conducteur (18, 18a, 18b);
13.9 un dispositif de mesure (22) pour déterminer un décalage tangentiel (TV) entre les extrémités de conducteur (18, 18a, 18b);
13.10 un dispositif de mesure (22) pour déterminer un décalage radial (RV) entre les extrémités de conducteur (18, 18a, 18b);
13.11 un dispositif de mesure (22) pour mesurer l'épaisseur, la largeur et/ou la hauteur de la zone d'extrémité au niveau du groupe d'extrémités de conducteur;
13.12 une combinaison d'un ou plusieurs des dispositifs de mesure selon les points 13.1 à 13.12.

14. Dispositif de soudure (12) selon l'une quelconque des revendications 8 à 13, **caractérisé en ce que** le moyen de commande (24) est adapté pour commander le moyen de soudure (16) pour:
14.1 guider un faisceau de soudure (26) sur les extrémités de conducteur groupées (18, 18a, 18b); et/ou
14.2 guider un faisceau de soudure (26) le long d'un contour symétrique (36); et/ou
14.3 guider un faisceau de soudure (26) le long d'un contour elliptique (36); et/ou
14.4 former un anneau de fusion (38) au moyen d'un faisceau de soudure (26); et/ou
14.5 former une nappe de fusion (48) au moyen d'un faisceau de soudure (26); et/ou
14.6 former une perle de soudure (42); et/ou
14.7 commencer l'apport d'énergie de soudure aux extrémités de conducteur groupées (18, 18a, 18b); et/ou
14.8 arrêter l'apport d'énergie de soudure aux extrémités de conducteur groupées (18, 18a, 18b); et/ou
14.9 arrêter l'apport d'énergie de soudure aux extrémités de conducteur groupées (18, 18a, 18b) lorsque la valeur déterminée atteint une valeur limite; et/ou
14.10 ajuster, en particulier augmenter ou diminuer, l'apport d'énergie de soudure aux extrémités de conducteur groupées (18, 18a, 18b); et/ou
14.11 appliquer un apport d'énergie de soudure prédéterminé, en particulier un apport d'énergie de soudure plus élevé, à l'extrémité de conducteur qui s'étend plus loin ou plus haut dans une direction d'extension principale des extrémités de conducteur groupées (18, 18a, 18b) dans le cas d'un décalage en hauteur (HV) entre les extrémités du conducteur (18, 18a, 18b); et/ou
14.12 distribuer un apport d'énergie de soudure en fonction d'un décalage tangentiel (TV) entre les extrémités de conducteur (18, 18a, 18b); et/ou
14.13 guider deux faisceaux de soudure sur les extrémités de conducteur groupées, en particulier guider de manière séquentiel un faisceau de soudure ou guider de manière simultané deux faisceaux de soudure, dans lequel un faisceau de soudure est affecté à une extrémité de conducteur des extrémités de conducteur groupées (18, 18a, 18b) et le second faisceau de soudure est affecté à une autre extrémité de conducteur des extrémités de conducteurs groupées (18, 18a, 18b); et/ou
14.14 détecter un moment où deux bains de fusion individuels se combinent en un seul bain de fusion, le premier bain de fusion étant affecté à une première extrémité de conducteur (18a) et le second bain de fusion étant affecté à la seconde extrémité de conducteur (18b); et/ou
14.15 souder les extrémités de conducteur (18, 18a, 18b), en particulier au niveau d'une zone d'extrémité (32) et/ou au niveau de la face d'extrémité, en un joint parallèle.

15. Produit de programme informatique comprenant des instructions de commande lisibles par machine qui, lorsqu'elles sont chargées dans un contrôleur d'un dispositif de soudure (12) selon l'une quelconque des revendications 8 à 14, amènent le dispositif de soudure (12) à exécuter le processus de soudure selon l'une quelconque des revendications 1 à 7.
